# EUROPEAN PATENT SPECIFICATION

(11) **EP 3 990 595 B1**
(45) Date of publication and mention of the grant of the patent: **27.07.2022**
(21) Application number: 21762425.3
(22) Date of filing: 11.08.2021
(51) Int. Cl.: C10M 161/00, C08F 290/04, C08K 3/013, C08K 3/04, C08K 3/14, C08K 3/22, C10N 20/04, C10N 20/06, C08L 55/00, C10N 30/06, C10N 40/04, C10N 40/08, C10N 40/25, C10N 50/00, C10N 50/10, C10N 70/00, C10N 20/00

(54) **COMPOSITIONS COMPRISING A GRAPHENE-BASED MATERIAL AS LUBRICANT ADDITIVES**
ZUSAMMENSETZUNGEN MIT EINEM GRAPHENBASIERTEN MATERIAL ALS SCHMIERSTOFFADDITIVE
COMPOSITIONS COMPRENANT UN MATÉRIAU À BASE DE GRAPHÈNE EN TANT QU'ADDITIFS DE LUBRIFICATION

(30) Priority: 18.09.2020 EP 20196912
(43) Date of publication of application: 04.05.2022
(73) Proprietor: Evonik Operations GmbH, 45128 Essen (DE)
(72) Inventor: BREUERS, Verena, 45721 Haltern am See (DE); NESS, Daniel, 63450 Hanau (DE); WIEBER, Stephan, 76137 Karlsruhe (DE); LEICH, Valeri, 47198 Duisburg (DE); HÖNIG, Jonas, 55218 Ingelheim am Rhein (DE); HAGEMANN, Michael Gerhard, Shanghai, 201702 (CN); WOMBACHER, Willibald, 63867 Johannesberg (DE); DÄSCHLEIN, Christian, 44625 Herne (DE)
(74) Representative: Evonik Patent Association
(86) International application number: PCT/EP2021/072411
(87) International publication number: WO 2022/058095

(56) References cited:
- WO-A1-2019/145307
- WO-A1-2020/172330
- DATABASE WPI Week 201801 Thomson Scientific, London, GB; AN 2017-816847 XP002802053, & CN 107 384 520 A (DING Y) 24 November 2017 (2017-11-24)

## Description

### TECHNICAL FIELD OF THE INVENTION

The invention relates to nanoparticle compositions comprising a graphene-based material and preparation process thereof. The invention also relates to the use thereof as a lubricant additive to improve tribological performance, in particular to improve anti-friction performance on metal parts, and to a lubricant composition comprising these nanoparticle compositions.

### BACKGROUND OF THE INVENTION

The present invention relates to the field of lubrication. Lubricants are compositions that reduce friction between surfaces. In addition to allowing freedom of motion between two surfaces and reducing mechanical wear of the surfaces, a lubricant also may inhibit corrosion of the surfaces and/or may inhibit damage to the surfaces due to heat or oxidation. Examples of lubricant compositions include, but are not limited to, engine oils, transmission fluids, gear oils, industrial lubricating oils, greases and metalworking oils.

Lubricants typically contain a base fluid and variable amounts of additives. Some additives in the lubricant formulation are used to reduce friction and wear between the contacts, which is important energy efficiency and durability of the device that is being lubricated.

In recent years, there has been a growing interest in the use of graphene nanoparticles as self-lubricating solid or as additive in lubricant formulations. Studies have shown that the addition of graphene nanoparticles can drastically improve wear and friction performance and attribute this to their easy shear capability on an atomically smooth surface, extreme strength and chemical inertness (Sumant et al., Mater. Today 17 (1), 31ff. (2014)).

However, creating stable dispersions of graphene nanoparticles is problematic. Because of their hydrophilic nature they form poor dispersions in oil or non-polar environments. Furthermore, the poor dispersion and weak forces of the particles draw particles together causing agglomeration and particle aggregates. These aggregates will lead to sedimentation that is unwanted and ineffective for any lubricating oil formulations.

In order to prevent this sedimentation and enhance dispersion, several techniques have been employed such as surface modification or use of dispersants. The surface modification is accomplished by reacting some surface groups of the particle with small molecules or polymers suited for non-polar fluids. However, usually large amounts of small molecules compared to the graphene are needed which is disadvantageous regarding package compatibilities. Moreover, the dispersions are susceptible to environmental influences and thus are not stable. This is because this method only covers part of the particle's surface and there is still a fair amount of hydrophilic character leading to agglomeration.

For instance, CN108102763A describes a two-step surface modification procedure in order to produce a serpentine / functionalized graphene lubricant additive. In a first step, they use an aminosilane coupling agent to obtain functionalized graphene oxide. In a second step, via thermal reaction with a magnesium silicate a composite material as lubricant additive is achieved. They claim excellent dispersibility, stability and performance. However, the final additive concentration in the lubricant oil only sums up to 0.01 % to 0.5 % by weight and no long-term data are available.

CN107758652A relates to surface modified graphene with a polymer via imide, amide or ester groups to improve dispersion stability. These stabilizing agents provide mostly coordinative bonding and also only one coordination point to the nanoparticles. This is still a disadvantage concerning stability and performance because this method only covers part of the particle's surface and there is still a fair amount of hydrophilic character, leading to agglomeration.

CN107384520A discloses graphene-containing lubricating oil comprising lube base oil, glyceryl tristearate, polymethacrylate, polyisobutene, octyl phenol, fluorine surfactant, silane coupling agent, diisocyanate and graphene oxide powder.

US2013324447A1 uses block copolymers with alkenylbenzene and linear alpha olefin blocks for the stabilization of carbon nanomaterials in lubricant oils. The resulting dispersions are obtained via shear mixing (ultra-turrax) and show improved tribological performance compared with pure base oil. However, stability decreases within the first 28 days drastically as shown by transmission measurements.

WO2020/172330A1 discloses graphenic carbon nanoparticles that are dispersed in solvents through the use of dispersant resins. The authors describe that exfoliated graphenic carbon nanoparticles, used according to the method of WO2020172330A1 and dispersed with polymers comprising vinyl heterocyclic amide monomers as functional groups, show poor stability in oil over time. Even more, the application is silent about tribological performance and stability under severe conditions.

WO2019145307A1 discloses polymeric-inorganic nanoparticle compositions comprising inorganic nanoparticles, namely, boron nitride (hBN), and functionalized comb polymers as all-in-one lubricant additives combining low temperature performance with anti-weld and anti-friction properties. The nanoparticle compositions do not only maintain excellent stability over a long period of time in the lubricating oil, but also avoid any incompatibilities between different DI package components. Reference is also made to graphene nanoparticle, but no further details is given on the type of graphene and no analytical data provided.

It was therefore an object of the present invention to provide graphene dispersions as lubricant additive which show not only improved anti-friction performances, but also have excellent stability over a long period of time when used in the lubricating oil composition. In addition, the lubricant additive should show good compatibilities with the different package components, dispersing agents, and other additives in a lubricant formulation to fulfill the industry needs.

### BRIEF SUMMARY OF THE INVENTION

In the present invention, it was surprisingly found that a nanoparticle composition prepared with a mill process as defined in claim 1, comprising a multilayered graphene-based material (A) with a surface area BET between 200 m²/g and 1,500 m²/g, and G/D ratio between 0.5 and 2 in accordance with ISO/TS 80004-13; a polyalkyl (meth)acrylate polymer (B); a silane compound (C) and a base fluid (D); can be used as a lubricant additive in a lubricating oil composition to improve drastically the anti-friction performance. The challenge was to combine a high amount of graphene nanoparticles in the composition to increase anti friction performance, while still maintaining these graphene nanoparticles well dispersed over a long period of time. Furthermore, the use of the claimed stabilized high-filled graphene nanoparticle composition shows great advantages for the lubricant oil formulation industry. There is no need of additional stabilization additives, and there is a negligible dilution impact which results in good DI package compatibilities.

According to a first aspect, the invention relates to nanoparticle compositions as defined in claim 1.

A second aspect of the invention is a method for preparing such nanoparticle compositions.

A third aspect of the invention is the use of such a nanoparticle composition as an additive for a lubricating oil composition to reduce the friction of moving parts.

A fourth aspect of the invention is a lubricating oil composition comprising one or more base oil and the nanoparticle composition of the invention.

### BRIEF DESCRIPTION OF THE DRAWING

For the purpose of better illustrating the advantages and properties of the claimed nanoparticle composition, object of the present invention, one graph is attached as a non-limiting example:

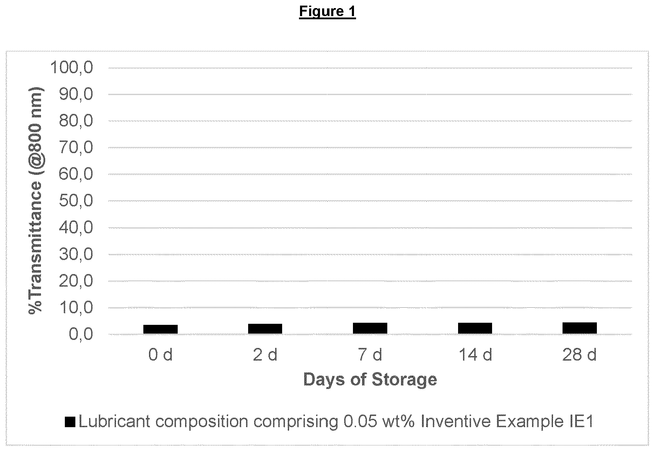

Figure 1 is a graph showing the development of light transmittance values at 800 nm of an oil lubricating composition comprising 0.05 % by weight of the nanoparticle composition IE1 as a function of storage time.

### DETAILED DESCRIPTION OF THE INVENTION

### Nanoparticle composition according to the invention

Thus, the present invention relates to nanoparticle composition comprising one or more nanoparticle (A), one or more polymer (B), one or more silane compound (C) and one or more base fluid (D), wherein
(A) the one or more nanoparticle (A) is a multilayered graphene-based material containing oxygen groups, with a surface area BET between 200 m²/g and 1,500 m²/g, and G/D ratio between 0.5 and 2, preferably with a surface area BET between 250 m²/g and 1,000 m²/g, more preferably between 350 m²/g and 800 m²/g, in accordance with ISO/TS 80004-13,
(B) the one or more polymer (B) is obtainable by polymerizing a monomer composition comprising:
   a) 1 to 30 % by weight, based on the total weight of the monomer composition, of one or more functional monomer selected from the list consisting of:
      a1) aminoalkyl (meth)acrylates and aminoalkyl (meth)acrylamides, preferably N-(3-dimethyl-aminopropyl)methacrylamide, 3-diethylaminopentyl (meth)acrylate, 3-dibutyl-aminohexadecyl (meth)acrylate;
      a2) nitriles of alkyl (meth)acrylic acid and other nitrogen-containing alkyl (meth)acrylates, preferably N-(methacryloyloxyethyl)diisobutylketimine, N-(methacryloyloxyethyl)dihexadecyl-ketimine, (meth)acryloylamidoacetonitrile, 2-methacryloyloxyethylmethylcyanamide, cyanomethyl (meth)acrylate;
      a3) (meth)acrylates of ether alcohols, preferably tetrahydrofurfuryl (meth)acrylate, methoxyethoxyethyl (meth)acrylate, 1-butoxypropyl (meth)acrylate, cyclohexyloxyethyl (meth)acrylate, propoxyethoxyethyl (meth)acrylate, benzyloxyethyl (meth)acrylate, furfuryl (meth)acrylate, 2-butoxyethyl (meth)acrylate, 2-ethoxy-2-ethoxyethyl (meth)acrylate, 2-methoxy-2-ethoxypropyl (meth)acrylate, ethoxylated (meth)acrylates, 1-ethoxybutyl (meth)acrylate, methoxyethyl (meth)acrylate, 2-ethoxy-2-ethoxy-2-ethoxyethyl (meth)acrylate, esters of (meth)acrylic acid and methoxy polyethylene glycols;
      a4) oxiranyl alkyl (meth)acrylate, preferably 2, 3-epoxybutyl (meth)acrylate, 3,4-epoxybutyl (meth)acrylate, 10,11 epoxyundecyl (meth)acrylate, 2,3-epoxycyclohexyl (meth)acrylate, oxiranyl (meth)acrylates such as 10,11-epoxyhexadecyl (meth)acrylate, glycidyl (meth)acrylate;
      a5) phosphorus-, boron- and/or silicon-containing alkyl (meth)acrylates, preferably like 2-(dimethyl-phosphato)propyl (meth)acrylate, 2-(ethylphosphito)propyl (meth)acrylate, 2 dimethylphosphinomethyl (meth)acrylate, dimethylphosphonoethyl (meth)acrylate, diethylmethacryloyl phosphonate, dipropylmethacryloyl phosphate, 2 (dibutylphosphono)ethyl (meth)acrylate, 2,3-butylenemethacryloylethyl borate, methyldiethoxymethacryloylethoxysiliane, diethylphosphatoethyl (meth)acrylate;
      a6) heterocyclic alkyl (meth)acrylates, preferably like 2-(1-imidazolyl)ethyl (meth)acrylate, 2-(4-morpholinyl)ethyl (meth)acrylate, oxazolidinylethyl (meth)acrylate and N-methacryloylmorpholine;
      a7) vinyl halides, preferably vinyl chloride, vinyl fluoride, vinylidene chloride and vinylidene fluoride;
      a8) vinyl esters, preferably vinyl acetate;
      a9) vinyl monomers containing aromatic groups, preferably styrene, substituted styrenes with an alkyl substituent in the side chain, such as alphamethylstyrene and alpha-ethylstyrene, substituted styrenes with an alkyl substituent on the ring such as vinyltoluene and p-methylstyrene, halogenated styrenes such as monochlorostyrenes, dichlorostyrenes, tribromostyrenes and tetrabromostyrenes;
      a10) heterocyclic vinyl compounds, preferably 2-vinylpyridine, 3-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, 2-vinylpyrrolidone, N-vinylpyrrolidine, 3-vinylpyrrolidine, N-vinylcaprolactam, N-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles;
      a11) vinyl and isoprenyl ethers;
      a12) methacrylic acid and acrylic acid, and
   b) 30 to 70% by weight of one or more alkyl (meth)acrylate monomer, wherein each of the alkyl group of the one or more alkyl (meth)acrylate monomer is independently linear, cyclic or branched and comprises from 1 to 40 carbon atoms, based on the total weight of the monomer composition, and
   c) 20 to 60 % by weight of one or more polybutadiene-based macromonomer having a number-average molecular weight (Mₙ) of 500 to 10,000 g/mol, based on the total weight of the monomer composition,
(C) 0.02 to 5 % by weight, based on the total weight of the nanoparticle composition, of the one or more silane compound (C) of formula (IV)

   **Si(R)(M)ₕ(X)₃₋ₕ** (IV)

   where 0 ≤ h ≤ 2; preferably h is 0,
   M is a branched or linear C₁ to C₄ alkyl residue,
   R is a branched or linear, aliphatic, aromatic or mixed aliphatic-aromatic C₁ to C₃₀ carbon-based group, or R is a branched or linear, aliphatic, aromatic or mixed aliphatic-aromatic C₁ to C₃₀ carbon-based group with a functional group selected from carboxy, carbonyl, hydroperoxycarbonyl, cyan, formyl, oxo, thioxo, hydroxy, amino, imino, hydrazino, epoxy; preferably R is selected from a linear aliphatic C₈ carbon-based group, a linear aliphatic C₁₆ carbon-based group, a linear aliphatic 3-aminopropyl group, or a 3-glycidyloxypropyl group,
   X is selected from H, Cl or a group OY , wherein Y is H or a C₁ to C₈ branched or linear alkyl-, alkenyl-, aryl-, or aralkyl- group, branched or linear C₂ to C₈ alkylether-group or a mixture thereof; preferably X is methoxy or ethoxy,
wherein the nanoparticle composition is obtainable by milling the nanoparticle composition, preferably via a ball mill process.

Preferably, the one or more polybutadiene-based macromonomer c) has a number-average molecular weight (Mₙ) of 1,500 to 7,500 g/mol, more preferably 3,500 to 7,000 g/mol, even more preferably 4,000 to 6,000 g/mol, most preferably 4,500 to 5,500 g/mol.

According to the present invention, it is preferred that the one or more polymer (B) has a weight-average molecular weight (M_{w}) of 10,000 to 1,000,000 g/mol, more preferably 50,000 to 800,000 g/mol, even more preferably 100,000 to 500,000 g/mol, most preferably 150,000 to 350,000 g/mol.

According to another preferred aspect of the invention, the one or more polymer (B) is obtainable by polymerizing a monomer composition comprising:
a) 1 to 30 % by weight, more preferably 5 to 30 % by weight, even more preferably 10 to 20 % by weight of the one or more functional monomer as component a), based on the total weight of the monomer composition; and
b1) 30 to 60 % by weight, more preferably 30 to 50 % by weight, even more preferably 35 to 50 % by weight of one or more alkyl (meth)acrylate of formula (I), as first component b): 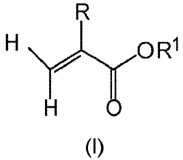 wherein R is hydrogen or methyl, R¹ means a linear, branched or cyclic alkyl residue with 1 to 8 carbon atoms, preferably 1 to 5 carbon atoms, and more preferably 1 to 4 carbon atoms, based on the total weight of the monomer composition; and
b2) 0 to 20 % by weight, more preferably 1 to 15 % by weight, even more preferably 1 to 10 % by weight of one or more alkyl (meth)acrylate of formula (II), as second component b): 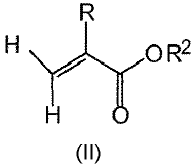 wherein R is hydrogen or methyl, R² means a linear, branched or cyclic alkyl residue with 9 to 15 carbon atoms, preferably 12 to 15 carbon atoms, and more preferably 12 to 14 carbon atoms, based on the total weight of the monomer composition; and
b3) 0 to 20 % by weight, more preferably 0 to 15 % by weight, even more preferably 0 to 10 % by weight of one or more alkyl (meth)acrylate of formula (III), as third component b): 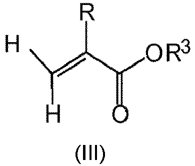 wherein R is hydrogen or methyl, R³ means a linear, branched or cyclic alkyl residue with 16 to 40 carbon atoms, preferably 16 to 30 carbon atoms, and more preferably 6 to 20 carbon atoms, based on the total weight of the monomer composition; and
c) 20 to 60 % by weight, more preferably 20 to 50 % by weight, even more preferably 30 to 50 % by weight of one or more polybutadiene-based macromonomer having a number-average molecular weight (Mₙ) of 500 to 10,000 g/mol, based on the total weight of the monomer composition.

Preferably, the weight contents of monomers a), b) and c) of the monomer composition to prepare the polymer (B) sum up to 100 % by weight, based on the total weight of the monomer composition.

Preferably, the one or more silane compound (C) of formula (IV) is octyltrimethoxysilane, hexadecyltrimethoxysilane, 3-aminopropyltriethoxysilane or 3-glycidyloxypropyltriethoxysilane.

Preferably, the nanoparticle composition comprises:
1 to 20 % by weight of one or more nanoparticle (A), more preferably 5 to 20 % by weight, even more preferably 8 to 17 % by weight of one or more nanoparticle (A), and
0.5 to 30 % by weight of one or more polymer (B), more preferably 3 to 30 % by weight, even more preferably 5 to 25 % by weight of one or more polymer (B), and
0.02 to 5 % by weight of one or more silane compound (C), more preferably 0.05 to 3 % by weight, even more preferably 0.1 to 2 % by weight of one or more silane compound (C), and 45 to 98.48 % by weight of one or more base fluid (D), more preferably 47 to 91.95 % by weight, even more preferably 56 to 86.9 % by weight of one or more base fluid (D),
all amounts based on the total weight of the nanoparticle composition.

According to another preferred aspect of the present invention, the weight contents of components A), B), C) and D) sum up to 100 % by weight, based on the total weight of the composition.

According to another preferred aspect of the present invention, the one or more base fluid (D) is selected from the list consisting of an API Group I base oil, an API Group II base oil, an API Group III base oil, an API Group IV base oil, an API Group V base oil, or a mixture thereof.

### Graphene nanoparticles (A)

According to the present invention, the one or more graphene nanoparticle (A) is a multilayered graphene-based material containing oxygen groups, with a surface area BET between 200 m²/g and 1,500 m²/g, and a G/D ratio between 0.5 and 2, preferably with a surface area BET between 250 m²/g and 1,000 m²/g, more preferably between 350 m²/g and 800 m²/g, in accordance with ISO/TS 80004-13.

The one or more graphene nanoparticle (A) in accordance with ISO/TS 80004-13 is preferably selected from a one to ten layer graphene, more preferably from a one to ten layer graphene selected from the group consisting of exfoliated graphene, graphene nanoplate, graphene nanoplatelet, graphene nanosheet, graphene microsheet, graphene nanoflakes, graphene oxide, graphene oxide nanosheet, multi-layer graphene oxide, reduced graphene oxide, or a mixture thereof.

Further details on graphenes, production thereof, properties and applications thereof can also be found in technical literature, such as in Angew. Chem. Int. Ed. 2014, 53, 7714-7718 or Mater. Today 2012, 15(3) 86-97.

Preferably, the nanoparticle composition according to the present invention comprises 1 to 20 % by weight of one or more nanoparticle (A), more preferably 5 to 20 % by weight, even more preferably 8 to 17 % by weight of one or more nanoparticle (A), based on the total weight of the nanoparticle composition.

### Polymer (B)

According to the invention, the one or more polymer compound (B) is obtainable by polymerizing a monomer composition comprising:
a) 1 to 30 % by weight, preferably 5 to 30 % by weight, more preferably 10 to 20 % by weight of the one or more functional monomer as component a), based on the total weight of the monomer composition; and
b) 30 to 70 % by weight, preferably 30 to 60 % by weight, more preferably 35 to 60 % by weight of one or more alkyl (meth)acrylate monomer, wherein each of the alkyl group of the one or more alkyl (meth)acrylate monomer is independently linear, cyclic or branched and comprises from 1 to 40 carbon atoms, based on the total weight of the monomer composition, and
c) 20 to 60 % by weight, more preferably 20 to 50 % by weight, even more preferably 30 to 50 % by weight of one or more polybutadiene-based macromonomer having a number-average molecular weight (Mₙ) of 500 to 10,000 g/mol, based on the total weight of the monomer composition.

In a preferred embodiment the amount of monomers a), b) and c) of the monomer composition sum up to 100 % by weight, based on the total weight of the monomer composition for preparing the polymer (B).

According to the present invention, it is preferred when the one or more polymer (B) has a weight-average molecular weight (M_{w}) of 10,000 to 1,000,000 g/mol, more preferably 50,000 to 1,000,000 g/mol, even more preferably 100,000 to 800,000 g/mol, most preferably 200,000 to 600,000 g/mol.

Preferably, the nanoparticle composition according to the present invention comprises 0.5 to 30 % by weight of one or more polymer (B), more preferably 3 to 30 % by weight, even more preferably 5 to 25 % by weight of one or more polymer (B), based on the total weight of the nanoparticle composition.

In the present invention, the weight-average molecular weights (M_{w}) of the polymers (B) were determined by gel permeation chromatography (GPC) using polystyrene calibration standards according to DIN 55672-1 using the following measurement conditions:
*Eluent:* tetrahydrofuran (THF) including 0.02M 2-diethylamino ethylamine
*Operation temperature:* 35 °C
*Columns:* the column set consists of one pre-column (SDV 10µ; 8 x 50 mm) and four columns: SDV 10⁶ Å, SDV 10⁵ Å and 2 × SDV 10³ Å (PSS Standards Service GmbH, Mainz, Germany), all four columns with the size of 300 × 8 mm and an average particle size of 10 µm
*Flow rate:* 1 mL/min
*Injected volume:* 100 µL
*Instrument:* Agilent 1100 series consisting of an autosampler, pump and column oven
*Detection device:* a refractive index detector from Agilent 1260 series.

### Functional monomer a)

As already defined above, the one or more functional monomer a) according to the present invention are selected from the list consisting of:
a1) aminoalkyl (meth)acrylates and aminoalkyl (meth)acrylamides;
a2) nitriles of alkyl (meth)acrylic acid and other nitrogen-containing alkyl (meth)acrylates;
a3) (meth)acrylates of ether alcohols;
a4) oxiranyl alkyl (meth)acrylate;
a5) phosphorus-, boron- and/or silicon-containing alkyl (meth)acrylates;
a6) heterocyclic alkyl (meth)acrylates;
a7) vinyl halides;
a8) vinyl esters;
a9) vinyl monomers containing aromatic groups;
a10) heterocyclic vinyl compounds;
a11) vinyl and isoprenyl ethers;
a12) methacrylic acid and acrylic acid.

Preferably, the functional monomer a) is selected from an aminoalkyl (meth)acrylate a1) or an aminoalkyl (meth)acrylamide a1) or a heterocyclic alkyl (meth)acrylate a6) or a vinyl monomer containing aromatic groups a9) or a mixture thereof. More preferably, from an aminoalkyl (meth)acrylamide a1) or a vinyl monomer containing aromatic groups a9) or a mixture thereof.

Even more preferably, the functional monomer a) is selected from aminoalkyl (meth)acrylamide, most preferably N-(3-dimethyl-aminopropyl)methacrylamide, as first component a), and a vinyl monomer containing aromatic groups, most preferably styrene, as second component a).

### Alkyl (meth)acrylate monomer b)

The term "C₁-₄₀ alkyl (meth)acrylates" refers to esters of (meth)acrylic acid and straight chain, cyclic or branched alcohols having 1 to 40 carbon atoms. The term encompasses individual (meth)acrylic esters with an alcohol of a particular length, and likewise mixtures of (meth)acrylic esters with alcohols of different lengths.

In one embodiment of the invention the monomer composition further comprises as component b) one or more alkyl (meth)acrylate monomer wherein each of the alkyl group of the one or more alkyl (meth)acrylate monomer independently is linear, cyclic or branched and comprises from 1 to 40 carbon atoms.

As already indicated above, according to the invention, the one or more alkyl (meth)acrylate monomer b) comprises
b1) one or more alkyl (meth)acrylate of formula (I): 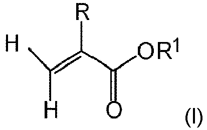 wherein R is hydrogen or methyl, R¹ means a linear, branched or cyclic alkyl residue with 1 to 8 carbon atoms, preferably 1 to 5 carbon atoms, and more preferably 1 to 4 carbon atoms,
b2) one or more alkyl (meth)acrylate of formula (II): 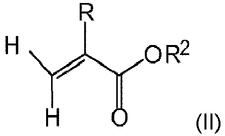 wherein R is hydrogen or methyl, R² means a linear, branched or cyclic alkyl residue with 9 to 15 carbon atoms, preferably 12 to 15 carbon atoms, and more preferably 12 to 14 carbon atoms,
b3) one or more alkyl (meth)acrylate of formula (III): 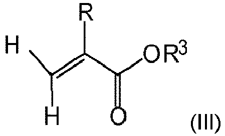 wherein R is hydrogen or methyl, R³ means a linear, branched or cyclic alkyl residue with 16 to 40 carbon atoms, preferably 16 to 30 carbon atoms, and more preferably 16 to 22 carbon atoms.

The term "C₁₋₈ alkyl (meth)acrylates" refers to esters of (meth)acrylic acid and straight chain or branched alcohols having 1 to 8 carbon atoms. The term encompasses individual (meth)acrylic esters with an alcohol of a particular length, and likewise mixtures of (meth)acrylic esters with alcohols of different lengths.

According to the invention each of the one or more monomer according to formula (I), i.e. the C₁₋₈ alkyl (meth)acrylates, may independently be selected from the group consisting of (meth)acrylates derived from saturated alcohols, preferably methyl (meth)acrylate, ethyl (meth)acrylate, n-propyl (meth)acrylate, isopropyl (meth)acrylate, n-butyl (meth)acrylate, tert-butyl (meth)acrylate, pentyl (meth)acrylate, hexyl (meth)acrylate, cycloalkyl (meth)acrylates, cyclopentyl (meth)acrylate, cyclohexyl (meth)acrylate, 2-ethylhexyl (meth)acrylate, heptyl (meth)acrylate, 2-tert-butylheptyl (meth)acrylate, n-octyl (meth)acrylate and 3-isopropylheptyl (meth)acrylate, the most preferred monomer according to formula (II) is methyl methacrylate.

Particularly preferred C₁₋₈ alkyl (meth)acrylates are methyl (meth)acrylate and n-butyl (meth)acrylate; methyl methacrylate and n-butyl methacrylate are especially preferred.

The term "C₉₋₁₅ alkyl (meth)acrylates" refers to esters of (meth)acrylic acid and straight chain or branched alcohols having 9 to 15 carbon atoms. The term encompasses individual (meth)acrylic esters with an alcohol of a particular length, and likewise mixtures of (meth)acrylic esters with alcohols of different lengths.

According to the invention each of the one or more monomer according to formula (II), i.e. the C₉₋₁₅ alkyl (meth)acrylates, may also independently be selected from the group consisting of nonyl (meth)acrylate, decyl (meth)acrylate, isodecyl (meth)acrylate, undecyl (meth)acrylate, 5-methylundecyl (meth)acrylate, n-dodecyl (meth)acrylate, 2-methyldodecyl (meth)acrylate, tridecyl (meth)acrylate, 5-methyltridecyl (meth)acrylate, n-tetradecyl (meth)acrylate, pentadecyl (meth)acrylate, oleyl (meth)acrylate, cycloalkyl (meth)acrylates, cyclohexyl (meth)acrylate having a ring substituent, tert-butylcyclohexyl (meth)acrylate, trimethylcyclohexyl (meth)acrylate, bornyl (meth)acrylate and isobornyl (meth)acrylate.

Particularly preferred C₉₋₁₅ alkyl (meth)acrylates are (meth)acrylic esters of a linear C₁₂₋₁₄ alcohol mixture (C₁₂₋₁₄ alkyl (meth)acrylate).

The term "C₁₆₋₄₀ alkyl (meth)acrylates" refers to esters of (meth)acrylic acid and straight chain or branched alcohols having 16 to 40 carbon atoms. The term encompasses individual (meth)acrylic esters with an alcohol of a particular length, and likewise mixtures of (meth)acrylic esters with alcohols of different lengths.

According to the invention each of the one or more monomer according to formula (III) , i.e. the C₁₆₋₄₀ alkyl (meth)acrylates, may also independently be selected from the group consisting of hexadecyl (meth)acrylate, 2-methylhexadecyl (meth)acrylate, heptadecyl (meth)acrylate, 5-isopropylheptadecyl (meth)acrylate, 4-tert-butyloctadecyl (meth)acrylate, 5-ethyloctadecyl (meth)acrylate, 3-isopropyloctadecyl (meth)acrylate, octadecyl (meth)acrylate, nonadecyl (meth)acrylate, eicosyl (meth)acrylate, cetyleicosyl (meth)acrylate, stearyleicosyl (meth)acrylate, docosyl (meth)acrylate, behenyl (meth)acrylate, eicosyltetratriacontyl (meth)acrylate, cycloalkyl (meth)acrylates, 2,4,5-tri-t-butyl-3-vinylcyclohexyl (meth)acrylate, and 2,3,4,5-tetra-t-butylcyclohexyl (meth)acrylate.

Preferably, the C₁₋₄₀ alkyl (meth)acrylates include a mixture of C₁₋₈ alkyl (meth)acrylates and C₉₋₁₅ alkyl (meth)acrylates, more preferably is a C₁₂₋₁₄ alkyl (meth)acrylate.

### Macromonomer component (c)

According to the invention, the above-defined monomer composition comprises as component c) one or more polybutadiene-based macromonomer having a number-average molecular weight of 500 to 10,000 g/mol. The polybutadiene-based macromonomers c) of the invention are esters of (meth)acrylic acid, which are either the reaction product of one ester of (meth)acrylic acid with one hydroxylated hydrogenated polybutadiene (by transesterification), or the reaction product of one (meth)acrylic acid with one hydroxylated hydrogenated polybutadiene (by direct esterification).

In this context, the polymer compound (B) of this invention comprises a first polymer, which is also referred to as backbone or main chain, and a multitude of further polymers which are referred to as side chains and are bonded covalently to the backbone. In the present case, the backbone of the polymer is formed by the interlinked unsaturated groups of the mentioned (meth)acrylic acid esters. The alkyl groups and the hydrogenated polybutadiene chains of the (meth)acrylic esters form the side chains of the polymer.

The reaction product of one ester of (meth)acrylic acid and one hydroxylated hydrogenated polybutadiene or the reaction product of one (meth)acrylic acid and one hydroxylated hydrogenated polybutadiene corresponds to monomer c) and is also referred in the present invention as macromonomer or polybutadiene-based macromonomer c) having a number-average molecular weight of 500 to 10,000 g/mol.

The number-average molecular weight Mₙ of the macromonomer is determined by gel permeation chromatography (GPC) using polybutadiene calibration standards according to DIN 55672-1 using the following measurement conditions:
*Eluent:* tetrahydrofuran (THF)
*Operation temperature:* 35 °C
*Columns:* the column set consists of one pre-column (PSS-SDV; 10µ; 8 × 50 mm), four PSS-SDV columns with a size of 300 × 8 mm and an average particle size of 10 µm (SDV-LXL, SDV-LinL, 2 columns SDV 100 Å (PSS Standards Service GmbH, Mainz, Germany)), and one solvent-peak separation column with a size of 8×100mm (KF-800D from the company Shodex)
*Flow rate:* 1 mL/min
*Injected volume:* 100 µL
*Instrument:* Agilent 1100 series consisting of an autosampler, pump and column oven
*Detection:* a refractive index detector from Agilent 1100 series

The one or more polymer compound (B) prepared with a monomer composition comprising the components a), b) and c) can be characterized on the basis of its molar degree of branching ("f-branch"). The molar degree of branching refers to the percentage in mol% of macromonomers (component (c)) used, based on the total molar amount of all the monomers in the monomer composition. The molar amount of the macromonomers used is calculated on the basis of the number-average molecular weight (Mₙ) of the macromonomers. The calculation of the molar degree of branching is described in detail in WO 2007/003238 A1, especially on pages 13 and 14, to which reference is made here explicitly.

Preferably, the one or more polymer compound (B) has a molar degree of branching f_{branch} of 0.1 to 6 mol%, more preferably 1 to 4 mol% and most preferably 1.5 to 3 mol%.

The one or more polybutadiene-based macromonomer for use as component c) in accordance with the invention have a number-average molecular weight (Mₙ) of 500 g/mol to 10,000 g/mol. Because of their high molecular mass, the hydroxylated hydrogenated polybutadienes can also be referred to as macroalcohols in the context of this invention. The corresponding esters of (meth)acrylic acid can also be referred to as macromonomers in the context of this invention.

Component c) may comprise a single type of macromonomer or may comprise a mixture of different macromonomers based on different macroalcohols.

The hydroxylated hydrogenated polybutadiene may be a single polybutadiene with a single number-average molecular weight (Mₙ) or it may be a mixture of different polybutadienes having different number-average molecular weight (Mₙ).

According to the present invention, the monomer composition comprises as component c) 20 to 60 % by weight, preferably 20 to 50 % by weight, more preferably 30 to 50 % by weight, of one or more polybutadiene-based macromonomer having a number-average molecular weight (Mₙ) of 500 g/mol to 10,000 g/mol, based on the total weight of the monomer composition.

In a preferred embodiment the one or more one or more polybutadiene-based macromonomer for use as component c) in accordance with the invention have a number-average molecular weight (Mₙ) of 1,500 to 7,500 g/mol, preferably of 3,500 to 7,000 g/mol, more preferably 4,000 to 6,000 g/mol, even more preferably 4,500 to 5,500 g/mol.

In another preferred embodiment, component c) may be one macromonomer prepared using one or more macroalcohols having different molecular weights, the first macroalcohol having a number-average molecular weight of 1,500 to 2,500 g/mol, more preferably 1,800 to 2,500 g/mol, most preferably 1,900 to 2,300 g/mol, and the second macroalcohol having a number-average molecular weight of 3,500 to 7,000 g/mol, preferably 4,000 to 6,000 g/mol, more preferably 4,500 to 5,500 g/mol. Component c) may also comprise a mixture of two macromonomers, the first macromonomer being prepared with a macroalcohol having a number-average molecular weight of 1,500 to 2,500 g/mol, more preferably 1,800 to 2,500 g/mol, most preferably 1,900 to 2,500 g/mol, and the second macromonomer being prepared with a macroalcohol having a number-average molecular weight of 3,500 to 7,000 g/mol, preferably 4,000 to 6,000 g/mol, more preferably 4,500 to 5,500 g/mol.

According to a preferred embodiment of the present invention, by combining two macromonomers of different number-average molecular weights, the weight proportion of the lower molecular weight macromonomer to the higher molecular weight macromonomer is preferably one or more, more preferably 1.5 to 15, even more preferably 2 to 7, most preferably 3 to 6.

In a preferred embodiment, the hydroxylated hydrogenated polybutadiene is a monohydroxylated hydrogenated polybutadiene, preferably a hydroxyethyl-terminated or hydroxypropyl-terminated hydrogenated polybutadiene.

In another preferred embodiment of the invention, the one or more ester of (meth)acrylic acid of the component c) used for the preparation of the polymer compound (B) is methyl (meth)acrylate or ethyl (meth)acrylate.

Preferably, the one or more hydroxylated hydrogenated polybutadiene has a hydrogenation level of at least 99%. An alternative measure of the hydrogenation level which can be determined on the polymer of the invention is the iodine number. The iodine number refers to the number of grams of iodine which can be added onto 100 g of polymer. Preferably, the polymer of the invention has an iodine number of not more than 5 g of iodine per 100 g of polymer. The iodine number is determined by the Wijs method according to DIN 53241-1:1995-05.

Preferred hydroxylated hydrogenated polybutadienes can be obtained according to GB 2270317.

As used herein, the term "hydroxylated hydrogenated polybutadiene" refers to a hydrogenated polybutadiene that comprises one or more hydroxyl group. The hydroxylated hydrogenated polybutadiene may further comprise additional structural units, such as polyether groups derived from the addition of alkylene oxides to a polybutadiene or a maleic anhydride group derived from the addition of maleic anhydride to a polybutadiene. These additional structural units may be introduced into the polybutadiene when the polybutadiene is functionalized with hydroxyl groups.

Preference is given to monohydroxylated hydrogenated polybutadienes. More preferably, the hydroxylated hydrogenated polybutadiene is a hydroxyethyl- or hydroxypropyl-terminated hydrogenated polybutadiene. A preference is given to hydroxypropyl-terminated polybutadienes.

These monohydroxylated hydrogenated polybutadienes can be prepared by first converting butadiene monomers by anionic polymerization to polybutadiene. Subsequently, by reaction of the polybutadiene monomers with an alkylene oxide, such as ethylene oxide or propylene oxide, a hydroxy-functionalized polybutadiene can be prepared. The polybutadiene may also be reacted with more than one alkylene oxide units, resulting in a polyether-polybutadiene block copolymer having a terminal hydroxyl group. The hydroxylated polybutadiene can be hydrogenated in the presence of a suitable transition metal catalyst.

These monohydroxylated hydrogenated polybutadienes can also be selected from products obtained by hydroboration of (co)polymers of having a terminal double bond (e.g. as described in US Patent No. 4,316,973); maleic anhydride-ene-amino alcohol adducts obtained by an ene reaction between a (co)polymer having a terminal double bond and maleic anhydride with an amino alcohol; and products obtained by hydroformylation of a (co)polymer having a terminal double bond, followed by hydrogenation (e.g. as described in JP Publication No. S63-175096).

The macromonomers c) for use in accordance with the invention can be prepared by transesterification of alkyl (meth)acrylates. Reaction of the alkyl (meth)acrylate with the hydroxylated hydrogenated polybutadiene forms the ester of the invention. Preference is given to using methyl (meth)acrylate or ethyl (meth)acrylate as reactant.

This transesterification is widely known. For example, it is possible for this purpose to use a heterogeneous catalyst system, such as lithium hydroxide/calcium oxide mixture (LiOH/CaO), pure lithium hydroxide (LiOH), lithium methoxide (LiOMe) or sodium methoxide (NaOMe) or a homogeneous catalyst system such as isopropyl titanate (Ti(OiPr)₄) or dioctyltin oxide (Sn(OCt)₂O). The reaction is an equilibrium reaction. Therefore, the low molecular weight alcohol released is typically removed, for example by distillation.

In addition, the macromonomers c) can be obtained by a direct esterification proceeding, for example, from (meth)acrylic acid or (meth)acrylic anhydride, preferably under acidic catalysis by p-toluenesulfonic acid or methanesulfonic acid, or from free methacrylic acid by the DCC method (dicyclohexylcarbodiimide).

Furthermore, the present hydroxylated hydrogenated polybutadiene can be converted to an ester by reaction with an acid chloride such as (meth)acryloyl chloride.

Preferably, in the above-detailed preparations of the esters of the invention, polymerization inhibitors are used, for example the 4-hydroxy-2,2,6,6-tetramethylpiperidinooxyl radical and/or hydroquinone monomethyl ether.

### Preferable monomer compositions for preparing the polymer (B)

According to a preferred aspect of the invention, the one or more polymer compound (B) is obtainable by polymerizing a monomer composition comprising:
a1) 0.5 to 5 % by weight of an aminoalkyl (meth)acrylamide, most preferably N-(3-dimethylaminopropyl)methacrylamide, as first component a), based on the total weight of the monomer composition;
a9) 5 to 15 % by weight of a vinyl monomer containing aromatic groups, most preferably styrene, as second component a), based on the total weight of the monomer composition;
b1) 35 to 50 % by weight of an alkyl (meth)acrylate monomer of formula (I), most preferably methyl methacrylate and/or butyl methacrylate, as first component b), based on the total weight of the monomer composition;
b2) 1 to 10 % by weight of an alkyl (meth)acrylate monomer of formula (II), most preferably lauryl methacrylate, as second component b), based on the total weight of the monomer composition;
c) 30 to 50 % by weight of one or more polybutadiene-based macromonomer having a number-average molecular weight (Mₙ) of 500 to 10,000 g/mol, most preferably having a number-average molecular weight (Mₙ) of 1,500 to 5,500 g/mol, as component c), based on the total weight of the monomer composition.

In an even preferred embodiment, the amounts of all monomers a), b) and c) of the monomer composition sum up to 100 % by weight, based on the total weight of the monomer composition.

### Preparation of the polymer compound (B)

According to the present invention, the above-mentioned polymers may be prepared following the method comprising the steps of:
(a) providing a monomer composition as describe above; and
(b) initiating radical polymerization in the monomer composition.

Standard free-radical polymerization is detailed, inter alia, in Ullmann's Encyclopedia of Industrial Chemistry, Sixth Edition. In general, a polymerization initiator and optionally a chain transfer agent are used for this purpose.

The polymerization can be conducted under standard pressure, reduced pressure or elevated pressure. The polymerization temperature is also uncritical. In general, however, it is in the range from -20 to 200°C, preferably 50 to 150°C and more preferably 80 to 130°C.

The polymerization step (b) may be performed with or without dilution in oil. If dilution is performed, then the amount of the monomer composition, i.e. the total amount of monomers, relative to the total weight of the reaction mixture is preferably 20 to 90 % by weight, more preferably 40 to 80 % by weight, most preferably 50 to 70 % by weight.

Preferably, the oil used for diluting the monomer mixture is an API Group I, II, III, IV or V oil, or a mixture thereof. Preferably, a Group III oil or a mixture thereof is used to dilute the monomer mixture.

Preferably, step (b) comprises the addition of a radical initiator.

Suitable radical initiators are, for example, azo initiators, such as azobis-isobutyronitrile (AIBN), 2,2'-azobis(2-methylbutyronitrile) (AMBN) and 1,1-azobiscyclohexanecarbonitrile, and peroxy compounds such as methyl ethyl ketone peroxide, acetylacetone peroxide, dilauryl peroxide, *tert-*butyl per-2-ethylhexanoate, ketone peroxide, *tert*-butyl peroctoate, methyl isobutyl ketone peroxide, cyclohexanone peroxide, dibenzoyl peroxide, *tert*-butyl peroxybenzoate, *tert*-butyl peroxyisopropylcarbonate, 2,5-bis(2-ethylhexanoylperoxy)-2,5-dimethylhexane, *tert*-butyl peroxy-2-ethylhexanoate, *tert*-butyl peroxy-3,5,5-trimethylhexanoate, dicumyl peroxide, 1,1-bis(*tert-*butylperoxy)cyclohexane, 1,1-bis(*tert*-butylperoxy)-3,3,5-trimethylcyclohexane, cumyl hydroperoxide, *tert*-butyl hydroperoxide and bis(4-*tert*-butylcyclohexyl) peroxydicarbonate.

Preferably, the radical initiator is selected from the group consisting of 2,2'-azobis(2-methylbutyronitrile), 2,2-bis(tert-butylperoxy)butane, *tert*-butylperoxy 2-ethylhexanoate, 1,1-di-*tert-*butylperoxy-3,3,5-trimethylcyclohexan, *tert*-butyl peroxybenzoate and *tert*-butylperoxy-3,5,5-trimethylhexanoat. Particularly preferred initiators are *tert*-butylperoxy 2-ethylhexanoate and 2,2-bis(tert-butylperoxy)butane.

Preferably, the total amount of radical initiator relative to the total weight of the monomer mixture is 0.01 to 5 % by weight, more preferably 0.02 to 1 % by weight, most preferably 0.05 to 0.6 % by weight.

The total amount of radical initiator may be added in a single step or the radical initiator may be added in several steps over the course of the polymerization reaction. Preferably, the radical initiator is added in several steps. For example, a part of the radical initiator may be added to initiate radical polymerization and a second part of the radical initiator may be added 0.5 to 3.5 hours after the initial dosage.

Preferably, step (b) also comprises the addition of a chain transfer agent. Suitable chain transfer agents are especially oil-soluble mercaptans, for example n-dodecyl mercaptan or 2-mercaptoethanol, or else chain transfer agents from the class of the terpenes, for example terpinolene. Particularly preferred is the addition of n-dodecyl mercaptan.

It is also possible to divide the monomer composition into an initial part and a second part and to add a part of the radical initiator to the initial part only to start the polymerization reaction therein. Then, the second part of the radical initiator is added to the second part of the monomer composition which is then added over the course of 0.5 to 5 hours, preferably 1.5 to 4 hours, more preferably 2 to 3.5 hours, to the polymerization reaction mixture. After addition of the second monomer mixture, a third part of the radical initiator may be added to the polymerization reaction as described above.

Preferably, the total reaction time of the radical polymerization is 2 to 10 hours, more preferably 3 to 9 hours.

After completion of the radical polymerization, the obtained polymer is preferably further diluted with the above-mentioned oil to the desired viscosity. Preferably, the polymer is diluted to a concentration of 5 to 60 % by weight polymer, more preferably 10 to 50 % by weight, most preferably 20 to 40 % by weight.

### Silane compound (C)

According to the present invention, the one or more silane compound (C) is of formula (IV)

**Si(R)(M)ₕ(X)₃₋ₕ** (IV)

where 0 ≤ h ≤ 2; preferably h is 0,
M is a branched or linear C₁ to C₄ alkyl residue,
R is a branched or linear, aliphatic, aromatic or mixed aliphatic-aromatic C₁ to C₃₀ carbon-based group, or R is a branched or linear, aliphatic, aromatic or mixed aliphatic-aromatic C₁ to C₃₀ carbon-based group with a functional group selected from carboxy, carbonyl, hydroperoxycarbonyl, cyan, formyl, oxo, thioxo, hydroxy, amino, imino, hydrazino, epoxy; preferably R is selected from a linear aliphatic C₈ carbon-based group, a linear aliphatic C₁₆ carbon-based group, a linear aliphatic 3-aminopropyl group, or a 3-glycidyloxypropyl group,
X is selected from H, Cl or a group OY , wherein Y is H or a C₁ to C₈ branched or linear alkyl-, alkenyl-, aryl-, or aralkyl- group, branched or linear C₂ to C₈ alkylether-group or a mixture thereof; preferably X is methoxy or ethoxy,

The nanoparticle composition according to the present invention comprises 0.02 to 5 % by weight of one or more silane compound (C), preferably 0.05 to 3 % by weight, more preferably 0.1 to 2 % by weight of one or more silane compound (C), based on the total weight of the nanoparticle composition.

Preferably, the one or more silane compound (C) of formula (IV) is octyltrimethoxysilane, hexadecyltrimethoxysilane, 3-aminopropyltriethoxysilane or 3-glycidyloxypropyltriethoxysilane.

### Base fluid (D)

The base fluid (D) in the nanoparticle composition can be a base oil selected from the list consisting of an API Group I base oil, an API Group II base oil, an API Group III, an API Group IV base oil and an API Group V base oil or a combination thereof.

The base fluid (D) may also be defined as specified by the American Petroleum Institute (API) (see April 2008 version of "Appendix E-API Base Oil Interchangeability Guidelines for Passenger Car Motor Oils and Diesel Engine Oils", section 1.3 Sub-heading 1.3. "Base Stock Categories").

The API currently defines five groups of lubricant base stocks (API 1509, Annex E - API Base Oil Interchangeability Guidelines for Passenger Car Motor Oils and Diesel Engine Oils, September 2011). Groups I, II and III are mineral oils which are classified by the amount of saturates and sulphur they contain and by their viscosity indices; Group IV are polyalphaolefins; and Group V are all others, including e.g. ester oils. The table below illustrates these API classifications.

**Table 1: API definition of lubricant base oils.**

| Group | Saturates | Sulphur content | Viscosity Index (VI) |
|---|---|---|---|
| I | < 90% | > 0.03% | 80-120 |
| II | at least 90% | not more than 0.03% | 80-120 |
| III | at least 90% | not more than 0.03% | at least 120 |
| IV | All polyalphaolefins (PAOs) | | |
| V | All others not included in Groups I, II, III or IV (e.g. ester oils) | | |

Further base oils which can be used in accordance with the present invention as base fluid (D) are Group II-III Fischer-Tropsch derived base oils.

Fischer-Tropsch derived base oils are known in the art. By the term "Fischer-Tropsch derived" is meant that a base oil is, or is derived from, a synthesis product of a Fischer-Tropsch process. A Fischer-Tropsch derived base oil may also be referred to as a GTL (Gas-To-Liquids) base oil. Suitable Fischer-Tropsch derived base oils that may be conveniently used as the base oil in the lubricating composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156, WO 01/57166 and WO 2013/189951.

Preferably, the base fluid (D) in the nanoparticle composition is an API Group III base oil.

### Process for preparing the nanoparticle composition of the invention

Another aspect of the present invention is a process for preparing a graphene nanoparticle composition according to the invention, which comprises the following steps
(i) providing one or more nanoparticle compound (A) as defined herein;
(ii) providing one or more polymer compound (B) as defined herein;
(iii) providing one or more silane compound (C) as defined herein;
(iv) providing one or more base fluid (D) as defined herein;
(v) combining (A) to (D) to obtain a mixture; and
(vi) milling the mixture of step (v).

The milling technology according to the invention described in step (vi) can be high pressure homogenization, high shear mixing, ball milling or ultrahigh-pressure technology (jet mill) or a combination thereof. Indeed, the particle size of the agglomerates is reduced using these milling technologies.

Preferably, the mixture of one or more nanoparticle (A), the one or more polymer compound (B), the one or more silane compound (C) and the one or more base fluid (D) is milled via a ball mill process in step (vi). More preferably, in step (v), either the compounds (A) and (C) are first mixed together and then mixed with (B) and (D) or (B), (C) and (D) are first mixed and (A) is added into this mixture prior to the ball milling step (vi).

Preferably, the ball mill process comprises introducing 0.1 to 10 kWh/kg, preferably 0.5 to 5 kWh/kg, more preferably 1 to 3 kWh/kg energy into the mixture.

In another preferred embodiment, the mixture of graphene nanoparticle (A), the one or more polymer compound (B) the one or more silane compound (C) and a one or more base fluid (D) is milled using ultrahigh-pressure technology (e.g. jet mill equipment Sugino Ultimaizer HJP- 25050). At least two flows of this mixture are sprayed by means of pumps, preferably high-pressure pumps, through one nozzle (0.10 or 0.25 mm diameter) each into a grinding chamber enclosed by a reactor housing onto a collision point, characterized in that the grinding chamber is flooded with the mixture and the finally milled mixture is removed from the grinding chamber by the overpressure of the continuous flow into the grinding chamber. The pump pressure is between 100 to 4,000 bar, preferably between 400 to 3,000 bar, more preferably between 1,000 to 2,500 bar.

According to this invention, the milling step (vi) is defined by a resulting change of particle size distribution of the graphene nanoparticle composition measured using dynamic light scattering technology (DLS).

### Pre-treatment

Preferably, in step (v) the compounds (A) and (C) are first mixed together by spraying method or ball milling method, and then mixed with (B) and (D).

By the pre-treatment method of spraying, the graphene nanoparticles (A) are first sprayed with water, if needed and appropriate, and subsequently with the silane compound (C). Spraying may also take place in the opposite order. The water used may have been acidified with an acid, preferably hydrochloric acid, to a pH of 7 to 1. If two or more silane compounds (C) are employed, they can be applied separately or as a mixture.

The one or more silane compound (C) may have been dissolved in suitable solvents. The end of spraying may be followed by mixing for 5 to 30 minutes more.

The mixture is subsequently treated thermally at a temperature of 20 to 400°C over a period of 0.1 to 6 h. The thermal treatment may take place under inert gas, preferably nitrogen.

The pre-treatment can be carried out in heatable mixers and dryers with spraying installations, continuously or batchwise. Suitable apparatus may for example be the following: ploughshare mixers, plate dryers, fluidized-bed dryers or fluid-bed dryers.

By the pre-treatment of ball milling, the graphene nanoparticles (A) are milled with silane compound (C), optionally previously dissolved in a solvent, preferably ethanol, using a ball mill at a rotational speed between 100 and 1,000 rpm, preferably 400 to 800 rpm for 1 to 120 min, preferably 5 to 25 min.

### Use of the nanoparticle composition according to the invention

A further aspect of the invention is the use of the nanoparticle composition according to the invention as an additive in a lubricating oil composition. Preferably, the lubricant additive is favorably used for driving system lubricating oils (such as manual transmission fluids, differential gear oils, automatic transmission fluids and belt-continuously variable transmission fluids, axle fluid formulations, dual clutch transmission fluids, and dedicated hybrid transmission fluids), hydraulic oils (such as hydraulic oils for machinery, power steering oils, shock absorber oils), engine oils (for gasoline engines and for diesel engines) and industrial oil formulations (such as wind turbine).

In a preferred embodiment according to the invention, the nanoparticle composition improves the anti-friction performance of moving metal parts of an engine, a gearbox or pump of an automobile, a wind turbine, or a hydraulic system.

### Lubricating oil composition

Yet another aspect of the invention is a lubricating oil composition comprising a nanoparticle composition as defined herein and at least one or more base oil (E).

In a preferred embodiment of the invention the base oil (E) is selected from the list consisting of an API Group I base oil, an API Group II base oil, an API Group III, an API Group IV base oil and an API Group V base oil or a mixture of one or more of these base oils, as described above in the paragraph relating to the base fluid (D).

The base oil (E) to be used in the lubricating oil composition preferably comprises an oil of lubricating viscosity. Such oils include natural and synthetic oils, oils derived from hydrocracking, hydrogenation, and hydro-finishing, unrefined, refined, re-refined oils or mixtures thereof.

Especially for transmission oil formulations, base oils of API Group III and mixtures of different Group III oils are used. In another preferred embodiment, the base oil may also be a mixture of one or more API Group V base oil with one or more API Group III base oil.

According to the present invention, the lubricating oil composition comprising the nanoparticle composition according to the invention and one or more base oil (E), may also optionally further comprise additives (F) as disclosed below. Preferably, the lubricating oil composition further comprises one or more additives (F) selected from the group consisting of antioxidants, anti-wear additives, pour point depressants, corrosion inhibitors, metal passivators or electrostatic discharge depressants, defoaming agents, seal fix or seal compatibility agents, or a mixture thereof.

According to the present invention, it is preferred that the lubricating oil composition comprises:
- 0.01 to 50 % by weight, more preferably 0.01 to 35 % by weight, even more preferably 0.1 to 25 % by weight of the nanoparticle composition, based on the total weight of the lubricating oil composition,
- 50 to 99.99 % by weight, more preferably 65 to 99.99 % by weight, even more preferably 75 to 99.9 % by weight of base fluid (E) and
- 0 to 20 % by weight, more preferably 0.05% to 15% by weight, even more preferably 5% to 15% by weight, of one or more additive component (F), based on the total weight of the lubricating oil composition.

Preferably, the amounts of the nanoparticle composition, the base fluid (E), the one or more additive component (F) add up to 98 % by weight, more preferably add up to 100 % by weight, based on the total weight of the lubricating oil composition.

The lubricating oil composition according to the invention may also further contain, as component (F), further additives selected from the group consisting of dispersants, defoamers, detergents, antioxidants, pour point depressants, antiwear additives, extreme pressure additives, anticorrosion additives, yellow metal passivator, friction modifiers, dyes and mixtures thereof.

Appropriate dispersants include poly(isobutylene) derivatives, for example poly(isobutylene)succinimides (PIBSIs), including borated PIBSIs; and ethylene-propylene oligomers having N/O functionalities.

Dispersants (including borated dispersants) are preferably used in an amount of 0 to 20% by weight, more preferably 0 to 15 % by weight, based on the total amount of the lubricant composition.

Suitable defoamers are silicone oils, fluorosilicone oils or fluoroalkyl ethers.

The defoaming agent is preferably used in an amount of 0.001 to 0.2% by weight, based on the total amount of the lubricant composition.

The preferred detergents include metal-containing compounds, for example phenoxides; salicylates; thiophosphonates, especially thiopyrophosphonates, thiophosphonates and phosphonates; sulfonates and carbonates. As metal, these compounds may contain especially calcium, magnesium and barium. These compounds may preferably be used in neutral or overbased form.

Detergents are preferably used in an amount of 0.2 to 8 % by weight, preferably 0.2 to 4% by weight, based on the total amount of the lubricant composition.

The suitable antioxidants include, for example, phenol-based antioxidants and amine-based antioxidants.

Phenol-based antioxidants include, for example, octadecyl-3-(3,5-di-tert-butyl-4-hydroxyphenyl)propionate; 4,4' -methylenebis(2,6-di-tert-butylphenol); 4,4' -bis(2,6-di-t-butylphenol); 4,4' -b is(2-methyl-6-t-butylphenol); 2,2' -methylenebis(4-ethyl-6-t-butylphenol); 2,2' -methylenebis( 4-methyl-6-t-butyl phenol); 4,4' -butyl idenebis(3-methyl-6-t-butylphenol); 4,4'-isopropylidenebis(2,6-di-t-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-t-butyl-4-methylphenol; 2,6-di-t-butyl-4-ethyl-phenol; 2,4-dimethyl-6-t-butylphenol; 2,6-di-t-amyl-p-cresol; 2,6-di-t-butyi-4-(N,N'-dimethylaminomethylphenol); 4,4'thiobis(2-methyl-6-t-butylphenol); 4,4'-thiobis(3-methyl-6-t-butylphenol); 2,2'-thiobis(4-methyl-6-t-butylphenol); bis(3-methyl-4-hydroxy-5-t-butylbenzyl) sulfide; bis(3,5-di-t-butyl-4-hydroxybenzyl) sulfide; n-octyl-3-(4-hydroxy-3,5-di-t-butylphenyl)propionate; n-octadecyl-3-(4-hydroxy-3,5-di-t-butylphenyl)propionate; 2,2'-thio[diethyl-bis-3-(3,5-di-t-butyl-4-hydroxyphenyl)propionate], etc. Of those, especially preferred are bis-phenol-based antioxidants and ester group containing phenol-based antioxidants.

The amine-based antioxidants include, for example, monoalkyldiphenylamines such as monooctyldiphenylamine, monononyldiphenylamine, etc.; dialkyldiphenylamines such as 4,4'-dibutyldiphenylamine, 4,4'-dipentyldiphe nylamine, 4,4'- dihexyldiphenylamine, 4,4'-diheptyldiphenylamine, 4,4'-dioctyldiphenylamine, 4,4'-dinonyldiphenylamine, etc.; polyalkyldiphenylamines such as tetrabutyldiphenylamine, tetrahexyldiphenylamine, tetraoctyldiphenylamine, tetranonyldiphenylamine, etc.; naphthylamines, concretely alpha-naphthylamine, phenyl-alpha-naphthylamine and further alkyl-substituted phenyl-alpha-naphthylamines such as butylphenyl-alpha-naphthylamine, pentylphenyl-alpha-naphthylamine, hexylphenyl-alpha-naphthylamine, heptylphenyl-alpha-naphthylamine, octylphenyl-alpha-naphthylamine, nonylphenyl-alpha-naphthylamine, etc. Of those, diphenylamines are preferred to naphthylamines, from the viewpoint of the antioxidation effect thereof.

Suitable antioxidants may further be selected from the group consisting of compounds containing sulfur and phosphorus, for example metal dithiophosphates, for example zinc dithiophosphates (ZnDTPs), "OOS triesters" = reaction products of dithiophosphoric acid with activated double bonds from olefins, cyclopentadiene, norbornadiene, α-pinene, polybutene, acrylic esters, maleic esters (ashless on combustion); organosulfur compounds, for example dialkyl sulfides, diaryl sulfides, polysulfides, modified thiols, thiophene derivatives, xanthates, thioglycols, thioaldehydes, sulfur-containing carboxylic acids; heterocyclic sulfur/nitrogen compounds, especially dialkyldimercaptothiadiazoles, 2-mercaptobenzimidazoles; zinc bis(dialkyldithiocarbamate) and methylene bis(dialkyldithiocarbamate); organophosphorus compounds, for example triaryl and trialkyl phosphites; organocopper compounds and overbased calcium- and magnesium-based phenoxides and salicylates.

Antioxidants are used in an amount of 0 to 15% by weight, preferably 0.01 to 10% by weight, more preferably 0.01 to 5% by weight, based on the total amount of the lubricant composition.

Suitable anticorrosion additives are succinic acid partial esters, succinic acid partial ester amine salts, organic carboxylic acids, sulfonates and suitable yellow metal passivators are thiadiazoles, triazoles and high molecular phenolic antioxidants.

Anticorrosion additives are used in an amount of 0 to 5% by weight, yellow metal passivators are used in an amount of 0 to 1% by weight, all amounts based on the total weight of the lubricant composition.

The pour-point depressants include ethylene-vinyl acetate copolymers, chlorinated paraffin-naphthalene condensates, chlorinated paraffin-phenol condensates, polymethacrylates, polyalkylstyrenes, etc. Preferred are polymethacrylates having a weight-average molecular weight (M_{w}) of from 5,000 to 200,000 g/mol.

The amount of the pour point depressant is preferably from 0.1 to 5% by weight, based on the total amount of the lubricant composition.

The preferred antiwear and extreme pressure additives include sulfur-containing compounds such as zinc dithiophosphate, zinc di-C₃₋₁₂-alkyldithiophosphates (ZnDTPs), zinc phosphate, zinc dithiocarbamate, molybdenum dithiocarbamate, molybdenum dithiophosphate, alkyl dithiophosphate, disulfides, sulfurized olefins, sulfurized oils and fats, sulfurized esters, thiocarbonates, thiocarbamates, polysulfides, etc.; phosphorus-containing compounds such as phosphites, phosphates, for example trialkyl phosphates, triaryl phosphates, e.g. tricresyl phosphate, amine-neutralized mono- and dialkyl phosphates, ethoxylated mono- and dialkyl phosphates,phosphonates, phosphines, amine salts or metal salts of those compounds, etc.; sulfur and phosphorus-containing anti-wear agents such as thiophosphites, thiophosphates, thiophosphonates, amine salts or metal salts of those compounds.

The antiwear agent may be present in an amount of 0 to 3% by weight, preferably 0.1 to 1.5% by weight, more preferably 0.5 to 0.9% by weight, based on the total amount of the lubricant composition.

The preferred friction modifiers may include mechanically active compounds, for example molybdenum disulphide, graphite (including fluorinated graphite), poly (trifluorethylene), polyamide, polyimide; compounds which form adsorption layers, for example long-chain carboxylic acids, fatty acid esters, ethers, alcohols, amines, amides, imides, phosphonates, phosphite; compounds which form layers through tribochemical reactions, for example saturated fatty acids, phosphoric acid, boric acid esters and thiophosphoric esters, xanthogenates, sulphurized fatty acids; compounds which form polymer-like layers, for example ethoxylated dicarboxylic acid partial esters, dialkyl phthalates, methacrylates, unsaturated fatty acids, sulphurized olefins and organometallic compounds, for example molybdenum compounds (molybdenum dithiophosphates and molybdenum dithiocarbamates MoDTC) and their combinations with ZnDTPs, copper-containing organic compounds.

Some of the compounds listed above may fulfil multiple functions. ZnDTP, for example, is primarily an antiwear additive and extreme pressure additive, but also has the character of an antioxidant and corrosion inhibitor (here: metal passivator/deactivator).

The above-detailed additives are described in detail, inter alia, in T. Mang, W. Dresel (eds.): "Lubricants and Lubrication", Wiley-VCH, Weinheim 2001; R. M. Mortier, S. T. Orszulik (eds.): "Chemistry and Technology of Lubricants".

The all-in-once lubricant formulation comprising the nanoparticle composition of the invention combines stability over the time, as well as improved anti-friction properties as shown below in the experimental part. This approach may therefore avoid any incompatibilities between different package components, dispersing agents, and other additives in the lubricant formulation as a single additive combines all properties.

### EXPERIMENTAL PART

The invention is further illustrated in detail hereinafter with reference to examples and comparative examples, without any intention to limit the scope of the present invention.

**Abbreviations**

| | |
|---|---|
| 9116 | hexadecyltrimethoxysilane |
| AMEO | 3-aminopropyltriethoxysilane |
| C₁ AMA | C₁-alkyl methacrylate (methyl methacrylate; MMA) |
| C₄ AMA | C₄-alkyl methacrylate (n-butyl methacrylate) |
| C₁₂₋₁₄ AMA | C₁₂₋₁₄-alkyl methacrylate |
| DMAPMAA | *N*-3-Dimethylaminopropylmethacrylamid |
| f_{branch} | degree of branching in mol% |
| GLYEO | 3-glycidyloxypropyltriethoxysilane |
| MMA | methyl(meth)acrylate |
| MA-1 | macroalcohol (hydroxylated hydrogenated polybutadiene Mn = 4,900 g/mol) |
| MM-1 | macromonomer of hydrogenated polybutadiene MA-1 with methacrylate functionality (Mₙ = 4,900 g/mol) |
| Mₙ | number-average molecular weight |
| MTM | Mini Traction Machine equipment |
| M_{w} | weight-average molecular weight |
| NB3020 | Nexbase^{®} 3020, Group III base oil from Neste with a KV₁₀₀ of 2.2 cSt |
| NB3043 | Nexbase^{®} 3043, Group III base oil from Neste with a KV₁₀₀ of 4.3 cSt |
| OCTMO | octyltrimethoxysilane |
| PDI | polydispersity index, molecular weight distribution calculated via M_{w}/Mₙ |
| PS standard | polystyrene calibration standards |
| Si69 | bis[3-(triethoxysilyl)propyl]polysulfid |

### Synthesis of a hydroxylated hydrogenated polybutadiene (macroalcohol) MA-1

The macroalcohol was synthesized by anionic polymerization of 1,3-butadiene with butyllithium at 20-45 °C. On attainment of the desired degree of polymerization, the reaction was stopped by adding propylene oxide and lithium was removed by precipitation with methanol. Subsequently, the polymer was hydrogenated under a hydrogen atmosphere in the presence of a noble metal catalyst at up to 140 °C and 200 bar pressure. After the hydrogenation had ended, the noble metal catalyst was removed and organic solvent was drawn off under reduced pressure to obtain a 100% macroalcohol MA-1. Table 2 summarizes the characterization data of MA-1:

**Table 2: Characterization data of used macroalcohol.**

| | Mₙ [g/mol] | Hydrogenation level [%] | OH functionality [%] |
|---|---|---|---|
| MA-1 | 4,900 | >99 | >98 |

### Synthesis of macromonomer MM-1

In a 2 L stirred apparatus equipped with saber stirrer, air inlet tube, thermocouple with controller, heating mantle, column having a random packing of 3 mm wire spirals, vapor divider, top thermometer, reflux condenser and substrate cooler, 1000 g of the above-described macroalcohol are dissolved in methyl methacrylate (MMA) by stirring at 60 °C. Added to the solution are 20 ppm of 2,2,6,6-tetramethylpiperidin-1-oxyl radical and 200 ppm of hydroquinone monomethyl ether. After heating to MMA reflux (bottom temperature about 110 °C) while passing air through for stabilization, about 20 mL of MMA are distilled off for azeotropic drying. After cooling to 95 °C, LiOCH₃ is added and the mixture is heated back to reflux. After the reaction time of about 1 hour, the top temperature has fallen to ~64 °C because of methanol formation. The methanol/MMA azeotrope formed is distilled off constantly until a constant top temperature of about 100 °C is established again. At this temperature, the mixture is left to react for a further hour. For further workup, the bulk of MMA is drawn off under reduced pressure. Insoluble catalyst residues are removed by pressure filtration (Seitz T1000 depth filter). Table 3 summarizes the MMA and LiOCH₃ amounts used for the synthesis of macromonomer MM-1.

**Table 3: Macroalcohol, MMA and catalyst amounts for the transesterification of the macromonomer**

| Macromonomer | Macroalcohol | Amount MMA [g] | Amount LiOCH₃ [g] |
|---|---|---|---|
| MM-1 | MA-1 | 500 | 1.5 |

As described above, the polymer weight-average molecular weights (M_{w}) of all inventive and comparative polymers were measured by gel permeation chromatography (GPC) using polystyrene calibration standards according to DIN 55672-1.

### Preparation of Inventive Example - amine- and macromonomer-containinq polymer (P1):

85 grams of Nexbase 3020, 85 grams of Berylane 230SPP, 98 grams of macromonomer, 107 grams of butyl methacrylate, 28 grams of styrene, 12.5 grams of lauryl methacrylate, 8.6 grams of dimethylaminopropylmethacrylamide, 0.5 grams of methyl methacrylate and 0.1 grams of n-dodecylmercaptan were charged into a 2-liter, 4-necked round bottom flask. The reaction mixture was stirred using a C-stirring rod, inerted with nitrogen, and heated to 115°C. Once the reaction mixture reached the setpoint temperature, 0.9 grams of tertbutyl-2-ethyleperoxyhexanoate were fed into the reactor over 3 hours. 0.5 grams of 2,2-di-(tert-butylperoxy)-butane were added in 30 minutes and 3 hours after the previous feed. The reaction was allowed to stir for one hour, and then an additional 175 grams of Nexbase 3020 were added to the reactor and allowed to mix for 1 hour. The polymer obtained has a weight-average molecular weight (M_{w}) of 238,000 g/mol (PS standard).

### Preparation of Comparative Example Polymer (P2):

200 grams of Nexbase 3043, 28,36 grams of benzylmethacrylate, 255,2 grams of lauryl methacrylate (C₁₂₋₁₄ AMA, 5,53 grams of n-dodecyl mercaptan (n-DDM) 5,53 grams of 2-Ethylhexylthioglycolate (TGEH) were charged into 2 liter, 4-necked round bottom flask. The reaction mixture was stirred using a C-stirring rod, inerted with nitrogen, and heated to 90°C. Once the reaction mixture reached the setpoint temperature, 2,83 grams t-butylper-2-ethylhexanoate was fed into the reactor over 2 hours. After 2 hours the mixture was heated up to 100°C and after reaching the setpoint 1,42 grams of t-butylper-2-ethylhexanoate and 1,13 grams of tert-butylperpivalate were fed in one hour. Residual monomer was measured by gas chromatography to ensure good monomer conversion. The polymer obtained has a weight-average molecular weight (M_{w}) of 9,470 g/mol (PS standard).

For the examples P1 and P2, the monomer components add up to 100%. The amount of initiator and chain transfer agent is given relative to the total amount of monomers. Table 4 below shows the monomer composition and reactants to prepare the polymers P1 and P2, as well as their final characterization.

**Table 4: Composition, weight-average molecular weight and PDI of polymers according to the present invention.**

| Ex | MM-1 | styrene | C₄ AMA | C₁ AMA | C₁₂₋₁₄ AMA | benzyl-methacrylate | DMAPMA | f_{branch} | Initiator | CTA | Mw | PDI |
|---|---|---|---|---|---|---|---|---|---|---|---|---|
| | [wt%] | [wt%] | [wt%] | [wt%] | [wt%] | [wt%] | [wt%] | - | [%] | [%] | [g/mol] | |
| P1 | 38.5 | 11.0 | 42.0 | 0.2 | 4.9 | - | 3.4 | 1.8 | 0.75 | 0.04 | 238,000 | 2.66 |
| P2 | - | - | - | - | 90.0 | 10 | - | - | 1.9 | 3.9 | 9,470 | 1.47 |

### Preparation of nanoparticle compositions according to the invention

### Inventive example Dispersion IE1:

The ball mill equipment (Netzsch Laboratory Mill Micro Series) is pre-loaded with 230.85 g NB3043 oil and 82.4 g of P1 and 1.75 g silane (Dynasylan OCTMO) while the peristaltic pump is set to 90 rpm and the ball mill to 1000 rpm. Afterwards, 35 g of graphene nanoparticles (surface area of 700 m²/g and a G/D ratio of 1,1) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 85 nm.

### Inventive example Dispersion IE2:

The ball mill equipment (Netzsch Laboratory Mill Micro Series) is pre-loaded with 230.85 g NB3043 oil and 82.4 g of P1 and 1.75 g silane (Dynasylan 9116) while the peristaltic pump is set to 90 rpm and the ball mill to 1000 rpm. Afterwards, 35 g of graphene nanoparticles (surface area of 700 m²/g and a G/D ratio of 1.1) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 76 nm.

### Inventive example Dispersion IE3:

The ball mill equipment (Netzsch Laboratory Mill Micro Series) is pre-loaded with 229.1 g NB3043 oil and 82.4 g of P1 and 3.5 g silane (Dynasylan OCTMO) while the peristaltic pump is set to 90 rpm and the ball mill to 1000 rpm. Afterwards, 35 g of graphene nanoparticles (surface area of 700 m²/g and a G/D ratio of 1.1) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LA- 950, Horiba Ltd., Japan) shows a d90 value of 75 nm.

### Inventive example Dispersion IE4:

The ball mill equipment (Netzsch Laboratory Mill Micro Series) is pre-loaded with 231.9 g NB3043 oil and 82.4 g of P1 and 0.7 g silane (Dynasylan OCTMO) while the peristaltic pump is set to 90 rpm and the ball mill to 1000 rpm. Afterwards, 35 g of graphene nanoparticles (surface area of 700 m²/g and a G/D ratio of 1.1) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 73 nm.

### Inventive example Dispersion IE5:

The ball mill equipment (Netzsch Laboratory Mill Micro Series) is pre-loaded with 230.85 g NB3043 oil and 82.4 g of P1 and 1.75 g silane (Dynasylan OCTMO) while the peristaltic pump is set to 90 rpm and the ball mill to 1000 rpm. Afterwards, 35 g of graphene nanoparticles (surface area of 500 m²/g and a G/D ratio of 1.0) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 96 nm.

### Inventive example Dispersion IE6:

The ball mill equipment (Netzsch Laboratory Mill Micro Series) is pre-loaded with 230.85 g NB3043 oil and 82.4 g of P1 and 1.75 g silane (Dynasylan OCTMO) while the peristaltic pump is set to 90 rpm and the ball mill to 1000 rpm. Afterwards, 35 g of graphene nanoparticles (surface area of 250 m²/g and a G/D ratio of 1.5) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 194 nm.

### Inventive example Dispersion IE7:

### The pre-treated graphene-based material was prepared as follows:

Ethanol (p.a.) was presented in an amount of 3 ppw. 1 ppw of silane (Dynasylan OCTMO) were carefully added with a syringe and stirred for about 10 min at room temperature. A clear phase was obtained. 10 ppw of graphene nanoparticles (surface area of 700 m²/g and G/D ratio of 1.1) were filled into the grinding vessel of a ball mill and 4 ppw of the clear phase were added. Moreover, 4 ppw grinding balls with diameters of 2 to 10 mm were added. The reaction took place in the ball mill at a rotational speed of 600 rpm for 15 min. The obtained functionalized graphene-based material was subsequently cleaned with ethanol (p.a.) by means of a Soxhlet apparatus, pre-dried overnight in the fume hood and subsequently dried at the rotary evaporator at 100 °C and at a pressure of 30 hPa during 3 h.

### Milling process:

The ball mill equipment (Netzsch Laboratory Mill Micro Series) is pre-loaded with 221.85 g NB3043 oil and 82.4 g of P1 while the peristaltic pump is set to 90 rpm and the ball mill to 1000 rpm. Afterwards, 35 g of pre-treated graphene nanoparticles are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 100 nm.

### Inventive example Dispersion IE8:

*The pre-treated graphene-based material was prepared as follows:* Ethanol (p.a.) was presented in an amount of 3 ppw. 1 ppw of silane (Dynasylan 9116) were carefully added with a syringe and stirred for about 10 min at room temperature. A clear phase was obtained. 10 ppw of graphene nanoparticles (surface area of 700 m²/g and G/D ratio of 1.1) were filled into the grinding vessel of a ball mill and 4 ppw of the clear phase were added. Moreover, 4 ppw grinding balls with diameters of 2 to 10 mm were added. The reaction took place in the ball mill at a rotational speed of 600 rpm for 15 min. The obtained functionalized graphene-based material was subsequently cleaned with ethanol (p.a.) by means of a Soxhlet apparatus, pre-dried overnight in the fume hood and subsequently dried at the rotary evaporator at 100 °C and at a pressure of 30 hPa during 3 h.

### Milling process:

The ball mill equipment (Netzsch Laboratory Mill Micro Series) is pre-loaded with 221.85 g NB3043 oil and 82.4 g of P1 while the peristaltic pump is set to 90 rpm and the ball mill to 1000 rpm. Afterwards, 35 g of pre-treated graphene nanoparticles are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 75 nm.

### Inventive example Dispersion IE9:

Preparation of pre-treated graphene-based material:
*The pre-treated graphene-based material was prepared as follows:* Ethanol (p.a.) was presented in an amount of 3 ppw. 1 ppw of silane (Dynasylan AMEO) were carefully added with a syringe and stirred for about 10 min at room temperature. A clear phase was obtained. 10 ppw of graphene nanoparticles (surface area of 700 m²/g and G/D ratio of 1.1) were filled into the grinding vessel of a ball mill and 4 ppw of the clear phase were added. Moreover, 4 ppw grinding balls with diameters of 2 to 10 mm were added. The reaction took place in the ball mill at a rotational speed of 600 rpm for 15 min. The obtained functionalized graphene-based material was subsequently cleaned with ethanol (p.a.) by means of a Soxhlet apparatus, pre-dried overnight in the fume hood and subsequently dried at the rotary evaporator at 100 °C and at a pressure of 30 hPa during 3 h.

### Milling process:

The ball mill equipment (Netzsch Laboratory Mill Micro Series) is pre-loaded with 221.85 g NB3043 oil and 82.4 g of P1 while the peristaltic pump is set to 90 rpm and the ball mill to 1000 rpm. Afterwards, 35 g of pre-treated graphene nanoparticles are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 79 nm.

### Inventive example Dispersion IE10:

*The pre-treated graphene-based material was prepared as follows:* Ethanol (p.a.) was presented in an amount of 3 ppw. 1 ppw of silane (Dynasylan GLYEO) were carefully added with a syringe and stirred for about 10 min at room temperature. A clear phase was obtained. 10 ppw of graphene nanoparticles (surface area of 700 m²/g and G/D ratio of 1.1) were filled into the grinding vessel of a ball mill and 4 ppw of the clear phase were added. Moreover, 4 ppw grinding balls with diameters of 2 to 10 mm were added. The reaction took place in the ball mill at a rotational speed of 600 rpm for 15 min. The obtained functionalized graphene-based material was subsequently cleaned with ethanol (p.a.) by means of a Soxhlet apparatus, pre-dried overnight in the fume hood and subsequently dried at the rotary evaporator at 100 °C and at a pressure of 30 hPa during 3 h.

### Milling process:

The ball mill equipment (Netzsch Laboratory Mill Micro Series) is pre-loaded with 221.85 g NB3043 oil and 82.4 g of P1 while the peristaltic pump is set to 90 rpm and the ball mill to 1000 rpm. Afterwards, 35 g of pre-treated graphene nanoparticles are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 81 nm.

### Inventive example Dispersion IE11:

The ball mill equipment (Netzsch Laboratory Mill Micro Series) is pre-loaded with 171.37 g NB3020 oil and 123.5 g of P1 and 2.63 g silane (Dynasylan OCTMO) while the peristaltic pump is set to 90 rpm and the ball mill to 1000 rpm. Afterwards, 52.5 g of graphene nanoparticles (surface area of 500 m²/g and a G/D ratio of 1.0) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 83 nm.

### Inventive example Dispersion IE12:

The ball mill equipment (Netzsch Laboratory Mill Micro Series) is pre-loaded with 232.42 g NB3043 oil and 82.4 g of P1 and 0.18 g silane (Dynasylan OCTMO) while the peristaltic pump is set to 90 rpm and the ball mill to 1000 rpm. Afterwards, 35 g of graphene nanoparticles (surface area of 500 m²/g and a G/D ratio of 1.0) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 86 nm.

### Preparation of nanoparticle compositions as comparative examples

### Comparative example Dispersion CE1:

The ball mill equipment (Netzsch Laboratory Mill Micro Series) is pre-loaded with 230.85 g NB3043 oil and 82.4 g of P1 while the peristaltic pump is set to 90 rpm and the ball mill to 1000 rpm. Afterwards, 35 g of graphene nanoparticles (surface area of 700 m²/g and a G/D ratio of 1.1) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 98 nm.

### Comparative example Dispersion CE2:

2 g of graphene nanoparticles (surface area of 700 m²/g and a G/D ratio of 1.1) are given into a solution of 16 g NB3043 and 2 g silane (Dynasylan OCTMO) while this mixture is treated with ultrasound (ultrasound processor UP400S with 400 Watt, 24kHz with Ti-sonotrode), respectively. The mixture was thickening tremendously after 4 min of treatment. US treatment had to be stopped. The particle size distribution (measured in Tegosoft DEC oil using dynamic light scattering equipment, LB-500, Horiba Ltd., Japan) shows a d90 value of 552 nm.

### Comparative example Dispersion CE3:

1 g of graphene nanoparticles (surface area of 700 m²/g and a G/D ratio of 1.1) are given into a solution of 18 g NB3043 and 1 g silane (Dynasylan OCTMO) while this mixture is treated with ultrasound (ultrasound processor UP400S with 400 Watt, 24kHz with Ti-sonotrode). The particle size distribution (measured in Tegosoft DEC oil using dynamic light scattering equipment, LB-500, Horiba Ltd., Japan) shows a d90 value of 494 nm.

### Comparative example Dispersion CE4:

2 g of graphene nanoparticles (surface area of 700 m²/g and a G/D ratio of 1.1) are given into a solution of 13.3 g NB3043 and 4.7 g P1 while this mixture is treated with ultrasound (ultrasound processor UP400S with 400 Watt, 24kHz with Ti-sonotrode) for 60 min. The particle size distribution (measured in Tegosoft DEC oil using dynamic light scattering equipment, LB-500, Horiba Ltd., Japan) shows a d90 value of 93 nm.

### Comparative example Dispersion CE5:

2 g of graphene nanoparticles (surface area of 700 m²/g and a G/D ratio of 1.1) are given into a solution of 14.6 g NB3043, 3.3 g P1 and 0.1 g silane (Dynasylan OCTMO) while this mixture is treated with ultrasound (ultrasound processor UP400S with 400 Watt, 24kHz with Ti-sonotrode) for 60 min. The particle size distribution (measured in Tegosoft DEC oil using dynamic light scattering equipment, LB-500, Horiba Ltd., Japan) shows a d90 value of 93 nm.

### Comparative example Dispersion CE6:

The ball mill equipment (Netzsch Laboratory Mill Micro Series) is pre-loaded with 280 g NB3043 oil and 35 g of P2 while the peristaltic pump is set to 90 rpm and the ball mill to 1000 rpm. Afterwards, 35 g of graphene nanoparticles (surface area of 700 m²/g and a G/D ratio of 1.1) are given into this solution. The peristaltic pump is adjusted to 130 rpm and the ball mill is set to a rotation speed of 3900 rpm. (1.0 kWh energy is introduced). The particle size distribution (measured in Tegosoft DEC oil using dynamic light scattering equipment, LB-500, Horiba Ltd., Japan) shows a d90 value of 573 nm.

### Comparative example Dispersion CE7:

The ball mill equipment (Netzsch Laboratory Mill Micro Series) is pre-loaded with 230.85 g NB3043 oil and 82.4 g of P1 and 1.75 g silane (Dynasylan Si 69) while the peristaltic pump is set to 90 rpm and the ball mill to 1000 rpm. Afterwards, 35 g of graphene nanoparticles (surface area of 700 m²/g and a G/D ratio of 1.1) are given into this solution. The peristaltic pump is adjusted to 130 rpm and the ball mill is set to a rotation speed of 3900 rpm. The dispersion is treated for 120 minutes (1.0 kWh energy is introduced). The particle size distribution (measured in Tegosoft DEC oil using dynamic light scattering equipment, LB-500, Horiba Ltd., Japan) shows a d90 value of 76 nm.

### Comparative example Dispersion CE8:

The ball mill equipment (Netzsch Laboratory Mill Micro Series) is pre-loaded with 230.85 g NB3043 oil and 82.4 g of P1 and 1.75 g silane (Dynasylan OCTMO) while the peristaltic pump is set to 90 rpm and the ball mill to 1000 rpm. Afterwards, 35 g of graphene nanoparticles (surface area of 170 m²/g and a G/D ratio of 2.8) are given into this solution. The peristaltic pump is adjusted to 130 rpm and the ball mill is set to a rotation speed of 3900 rpm. The mixture showed tremendous thickening after 120 min of treatment. (1.0 kWh energy is introduced). The particle size distribution (measured in Tegosoft DEC oil using dynamic light scattering equipment, LB-500, Horiba Ltd., Japan) shows a d90 value of 1267 nm.

### Comparative example Dispersion CE9:

The ball mill equipment (Netzsch Laboratory Mill Micro Series) is pre-loaded with 230.85 g NB3043 oil and 82.4 g of P1 and 1.75 g silane (Dynasylan OCTMO) while the peristaltic pump is set to 90 rpm and the ball mill to 1000 rpm. Afterwards, 35 g of graphene nanoparticles (surface area of 110 m²/g and a G/D ratio of 2.6) are given into this solution. The peristaltic pump is adjusted to 130 rpm and the ball mill is set to a rotation speed of 3900 rpm. The mixture showed tremendous thickening after 120 min of treatment. (1.0 kWh energy is introduced). The particle size distribution (measured in Tegosoft DEC oil using dynamic light scattering equipment, LB-500, Horiba Ltd., Japan) shows a d90 value of 1807 nm.

Table 5 below summarizes the inventive nanoparticle compositions (inventive dispersions IE1 to IE11) according to the invention and the comparative nanoparticle compositions (comparative dispersions C1 to C9). The listed weight percentages are based on the total weight of the respective nanoparticle compositions.

**Table 5: Comparison of dispersions according the present invention**

| Example | Graphene (A) in wt% | Graphene BET [m²/g] | Graphene Raman G/D | Polymer (B) | Polymer in wt% | Silane (C) | Silane in wt% | Nexbase^{®} 3043 (D) in wt% |
|---|---|---|---|---|---|---|---|---|
| IE1 | 10 | 700 | 1.1 | P1 | 10 | OCTMO | 0.5 | 79.5 |
| IE2 | 10 | 700 | 1.1 | P1 | 10 | 9116 | 0.5 | 79.5 |
| IE3 | 10 | 700 | 1.1 | P1 | 10 | OCTMO | 1 | 79 |
| IE4 | 10 | 700 | 1.1 | P1 | 10 | OCTMO | 0.2 | 79.8 |
| IE5 | 10 | 500 | 1.0 | P1 | 10 | OCTMO | 0.5 | 79.5 |
| IE6 | 10 | 250 | 1.5 | P1 | 10 | OCTMO | 0.5 | 79.5 |
| IE7 | 10 | 700 | 1.1 | P1 | 10 | OCTMO | 1 | 79 |
| IE8 | 10 | 700 | 1.1 | P1 | 10 | 9116 | 1 | 79 |
| IE9 | 10 | 700 | 1.1 | P1 | 10 | AMEO | 1 | 79 |
| IE10 | 10 | 700 | 1.1 | P1 | 10 | GLYEO | 1 | 79 |
| IE11 | 15 | 500 | 1.0 | P1 | 15 | OCTMO | 0.75 | 69.25 (Nexbase^{®} 3020) |
| IE12 | 10 | 500 | 1.0 | P1 | 10 | OCTMO | 0.05 | 79.95 |
| CE1 | 10 | 700 | 1.1 | P1 | 10 | - | - | 80 |
| CE2 | 10 | 700 | 1.1 | | | OCTMO | 10 | 80 |
| CE3 | 5 | 700 | 1.1 | | | OCTMO | 5 | 90 |
| CE4 | 10 | 700 | 1.1 | P1 | 7 | - | - | 83 |
| CE5 | 10 | 700 | 1.1 | P1 | 7 | OCTMO | 0.5 | 82.5 |
| CE6 | 10 | 700 | 1.1 | P2 | 10 | - | - | 80 |
| CE7 | 10 | 700 | 1.1 | P1 | 10 | Si69 | 0.5 | 79.5 |
| CE8 | 10 | 170 | 2.8 | P1 | 10 | OCTMO | 0.5 | 79.5 |
| CE9 | 10 | 110 | 2.6 | P1 | 10 | OCTMO | 0.5 | 79.5 |

### Dynamic light scattering (DLS)

The particle size distribution was measured in Tegosoft DEC oil using the dynamic light scattering equipment LB-500 produced by Horiba Ltd.

Dynamic light scattering (DLS) is a technique in physics that can be used to determine the size distribution profile of small particles in suspension or polymers in solution. This equipment can be used to measure the particle size of dispersed material in the range from 3 nm to 6 µm. The measurement is based on the Brownian motion of the particles within the medium and the scattering of incident laser light because of a difference in refraction index of liquid and solid material.

The resulting value is the hydrodynamic diameter of the particle's corresponding sphere. The values dᵥ50, dᵥ90 and dᵥ99 are common standards for discussion, as these describe the hydrodynamic diameter of the particle below which 50%, 90% or 99% of the particles are within the particle size distribution. The lower these values, the better the particle dispersion. Monitoring these values can give a clue about the particle dispersion stability. If the values increase tremendously, the particles are not stabilized enough and may tend to agglomerate and sediment over time resulting in a lack of stability. Depending on the viscosity of the medium, it can be stated, that a d90 value of < 200 nm (e.g. for Nexbase base oil) is an indication for a stable dispersion as the particles are held in abeyance over time.

Example IE1, Example IE7 and Example IE9 of Table 5 were submitted to a stability test where these were characterized by measuring the particle size distribution using the DLS method previously described. This has been done after production, after one week and after four weeks, respectively, as shown in Table 6 below.

**Table 6: Change of DLS values over time for chosen examples.**

| | **Example** # | **IE1** | **IE7** | **IE9** |
|---|---|---|---|---|
| **d50 values:** | | | | |
| **after preparation** | [nm] | 63 | 66 | 60 |
| **1 week** | [nm] | 64 | 59 | 56 |
| **4 weeks** | [nm] | 65 | 63 | 64 |
| **d90 values:** | | | | |
| **after preparation** | [nm] | 85 | 100 | 79 |
| **1 week** | [nm] | 81 | 78 | 73 |
| **4 weeks** | [nm] | 86 | 80 | 80 |
| **d99 values:** | | | | |
| **after preparation** | [nm] | 113 | 147 | 111 |
| **1 week** | [nm] | 140 | 124 | 120 |
| **4 weeks** | [nm] | 129 | 119 | 104 |

The results of Table 6 demonstrate the excellent stability of the nanoparticle compositions according to the invention and show that very little agglomeration occurs in these dispersions over a long period of time. The particle size values do not increase significantly.

Within the time frame of 4 weeks the dᵥ50, dᵥ90 and dᵥ99 values are comparable and can be considered to correspond to a stable dispersion. Indeed, the values remain below the aforementioned dᵥ90 of 200 nm, and taking into account the accuracy of the measurement method (approximately 10 relative %) the d90 values of the examples in Table 6 are close to the initial measured values after production. As a comparison, it may be mentioned that a dispersion using graphene particles according to the invention, but without the use of polymer compound (B) (example CE2) results in DLS values of 484, 552, 581 nm (dᵥ50, dᵥ90, dᵥ99, respectively). These are much higher than the particles dispersed in the inventive dispersion system of the present invention.

### Dispersion stability test by visual appearance

According to this invention, the performance of our nanoparticle compositions is judged by two further stability tests. Therefore, each sample was diluted to a 0.1 wt% solution of the nanoparticle composition, based on the total weight of the different compositions. The dilution was prepared by blending one concentrate chosen from the inventive examples or comparative examples in a 10 mL glass vial at room temperature. For example, 0.05 grams of inventive example IE1 were mixed with 4.95 grams of NB3043 to obtain a 0.1 wt% solution of graphene nanoparticles IE1-1.

The corresponding dilution was stored at room temperature. The vials were checked after 1 week, and after 4 weeks for signs of sedimentation or other instabilities (e.g. clearing up). The stability of the dispersion was judged visually by the amount of sedimentation after slowly tilting the vial. Sedimentation is the tendency for particles in suspension to settle out of the fluid in which they are entrained and come to rest against a barrier. Adverse effects resulting from the settlement of particles are usually handled by the use of dispersing agent. The sedimentation behavior was classified into 4 categories: ∘: no sedimentation (no particles settled at the bottom of the vial); Δ: minor sedimentation (some particles start to settle at the bottom of the vial); +: moderate sedimentation (thin layer at the bottom of the vial), and +++: nearly complete sedimentation (a great amount of particles have settled).

The results obtained are shown below in Table 7 for inventive examples and Table 8 for comparative examples.

### Dynamic Viscosity

The dynamic viscosity was measured with the Physica MCR 301 from Anton Paar using the rotational viscosity method and a measuring plate PP25 with the distance set to 0.5 mm.

The motor of the viscometer drives a bob inside a fixed cup. The rotational speed of the bob is preset and produces a certain motor torque that is needed to rotate the measuring bob. This torque must overcome the viscous forces of the tested substance and is therefore a measure for its viscosity. Data are measured at a shear rate of 100 s⁻¹ and 22 °C.

### Dispersion stability test by monitoring viscosity changes

Key of the present invention is the production of stable, highly filled graphene nanoparticles dispersions. Over time, dispersed particles tend to interact with one another, especially if their surfaces show different polarity compared to the surrounding media. Additives are used within a dispersion to prevent this interaction. On the one hand, this interaction can cause agglomeration and sedimentation, which has been evaluated in the former section. On the other hand, this interaction might lead to a formation of networks within the fluid, which leads to a significant increase in viscosity of the dispersion.

To investigate the latter behavior, we conducted viscosity measurements of the dispersions after 1 and 4 weeks and calculated the change in viscosity. In respect of the present invention, this is the most important test. Out of the comparative examples, only those are submitted to this test, which were showing 1. a dᵥ90 value smaller than 200 nm and 2. no strong sedimentation.

Viscosity measurements are always performed with the concentrated inventive and comparative examples (10 or 15 wt%) to properly judge the change of viscosity.

As shown below in Table 7, the inventors of the present invention were able to prepare nanoparticle dispersions which do not show a significant increase of viscosity after 4 weeks.

In contrast, the comparative nanoparticles dispersions in Table 8 show a significant viscosity increase after four weeks. The comparative example CE1 shows even a viscosity increase of more than 50% after only one week.

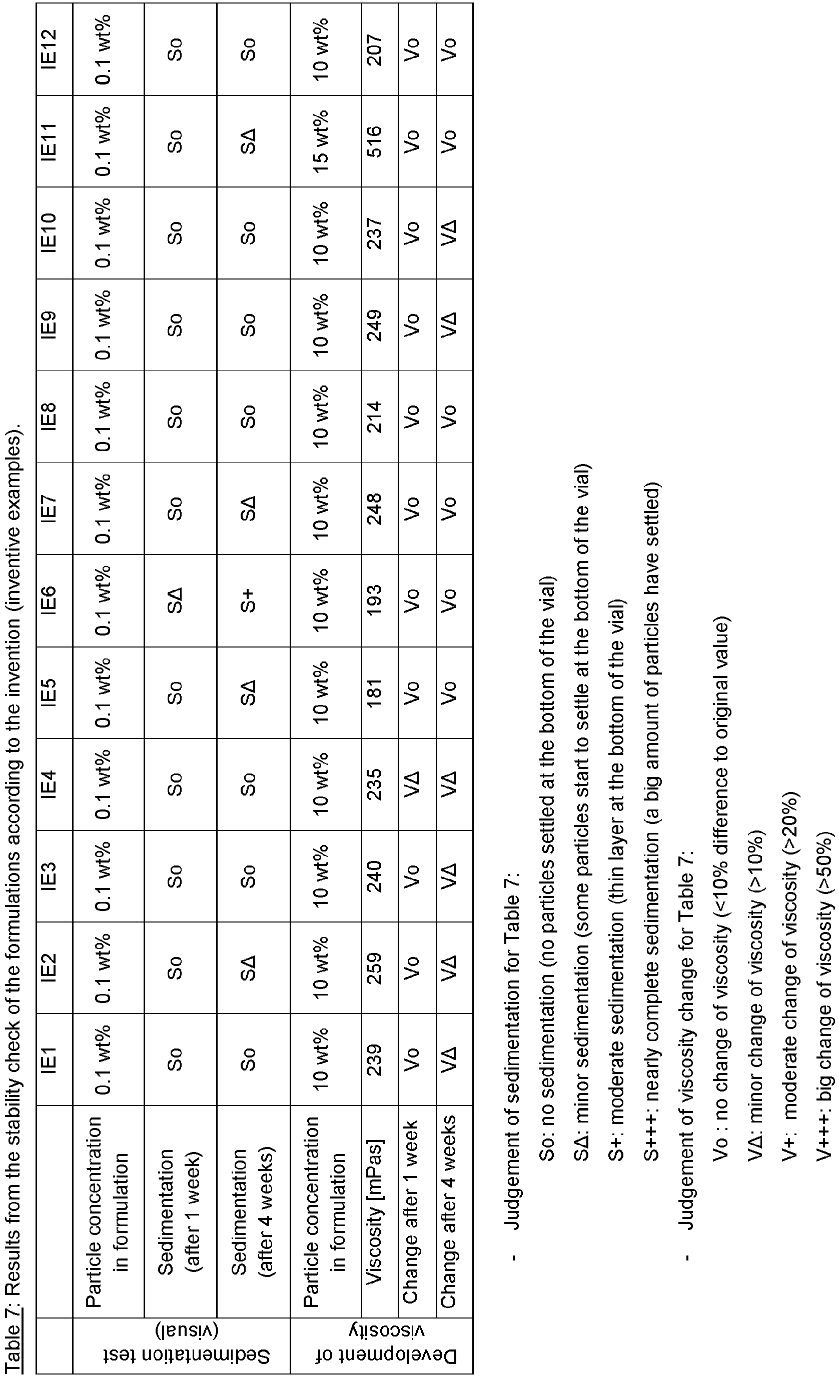

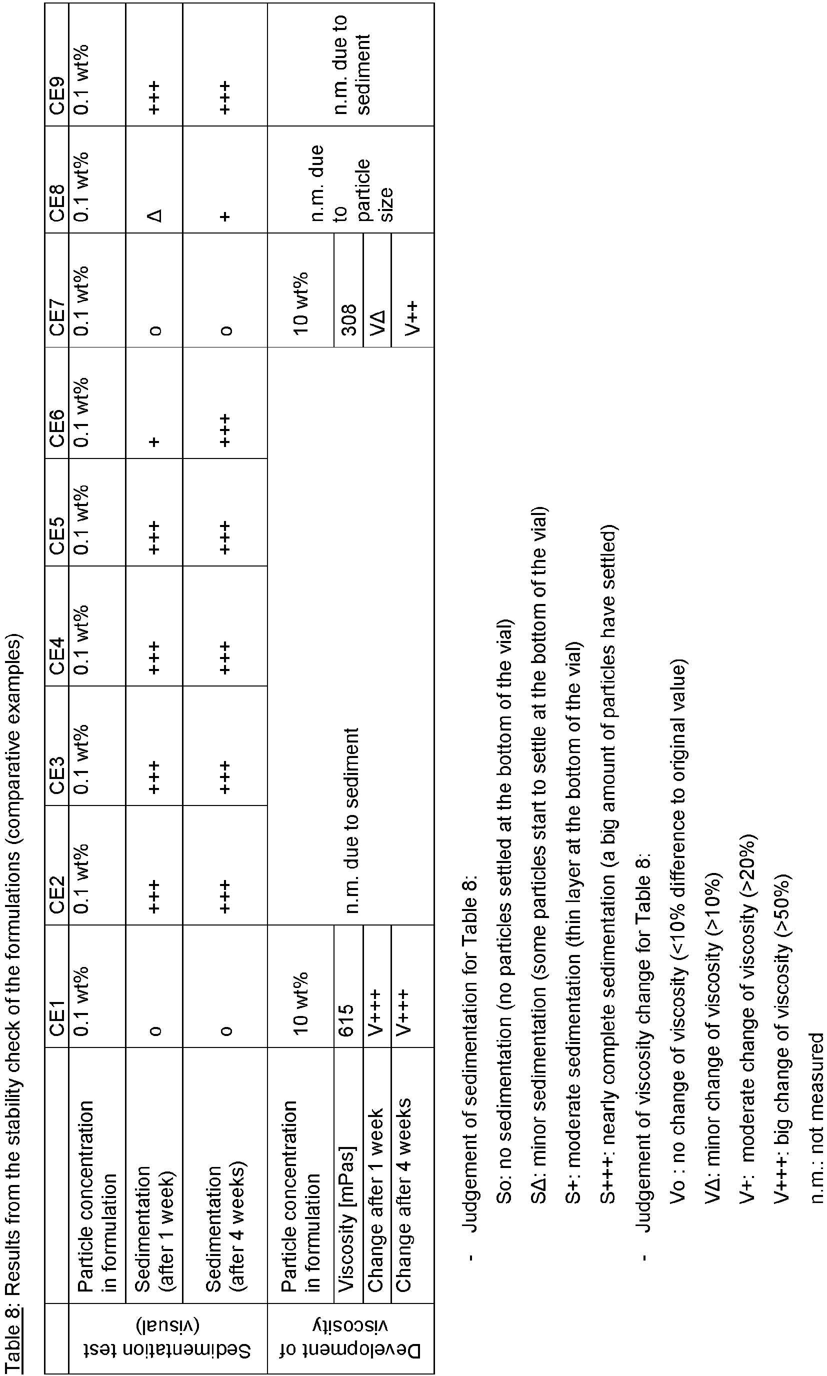

As shown in Tables 7 and 8, the nanoparticle compositions, which do not contain any silane compound, do not show a good stability over time (see comparative examples CE1, CE4 and CE6). This is either due to the fact that those show strong sedimentation or a big increase in viscosity. Nanoparticle dispersions solely produced by ultrasound treatment also do not show a good stability (see comparative examples CE2, CE3 and CE4). Although the particle size distribution can be low, a strong sedimentation is visible after 4 weeks. A milling treatment according to the present invention is needed to achieve stable nanoparticle compositions according to this invention.

Only the inventive examples according to the present invention show a combination of particle size lower than 200 nm (dᵥ90), good visual stability without any significant amount of sediment and no big increase in viscosity after 4 weeks. The formulation prepared with a nanoparticle composition comprising a low amount of silane compound (C) also shows great dispersion stability without any particle sedimentation being observed and no increase in viscosity after four weeks (see inventive example IE12 prepared with a nanoparticle composition comprising 0.05 % by weight of silane compound (C), based on the total weight of the nanoparticle composition). In case other polymers (see comparative example CE6) or graphene nanoparticles not fulfilling the definition according to the present invention (see comparative examples CE8 and CE9) are used, too high particle size (dᵥ90), or strong sedimentation is observed.

### Light transmittance measurement using a spectrophotometer

Inventive example 1 has been diluted to 0.005 wt% particle content in NB3043 base oil to allow a light transmittance measurement with optical spectroscopy (resulting in a lubricant composition comprising 0.05 wt% of IE1). Using a cuvette with 1 cm width this sample was submitted to a measurement of the light absorption and transmittance using a Perkin Elmer Lambda 950S UV/Vis/NIR spectrophotometer. The light transmittance at 800 nm has been recorded after different days of storage.

These results in **Figure 1** show, that the compositions according to the invention are very stable against dilution and sedimentation over time. Indeed, the light transmittance of the sample only increases by about 1% after 28 days of storage (see figure 1). Compared to the state-of-the-art results as disclosed in US8,703,666 B2, where the light transmittance increases by about 45% after 28 days of storage, a much better performance can be achieved with the dispersions according to the present invention. This strong improvement in stability enables a good and reproducible usage in industrial applications.

### Determination of the reduction in friction via mini traction machine (MTM)

The coefficient of friction was measured using a Mini traction machine named MTM2 from PCS Instruments following the test method described in Table 9 below. SRR refers to the Sliding Roll Ratio. This parameter was maintained constant during the 2 hours test and is defined as *(U_{Ball}*-*U_{Disc})*/*U* wherein *(U_{Ball}- U_{Disc})* represents the sliding speed and *U* the entrainment speed, given by *U* = *(U_{Ball}* + *U_{Disc})* / 2. Stribeck curves for each sample were measured according to protocol in Table 9.

**Table 9: Protocol to measure the Stribeck curves.**

| | Method 1 |
|---|---|
| Test Rig | MTM 2 from PCS Instruments |
| Disc | Highly polished stainless Steel AISI 52100 |
| | Disc diameter 46mm |
| Ball | Highly polished stainless Steel AISI 52100 |
| | Ball diameter 19.05mm |
| Speed | 5-2500 mm/s |
| Temperature | 100°C |
| Load | 30N |
| SRR | 50% |

According to MTM Method 1, the friction coefficient was recorded over the complete range of speed for each blend and a Stribeck curve is obtained. The friction tests were performed according to these conditions for lubricating oil formulations comprising the inventive nanoparticle composition IE1 listed in Table 10. Friction test results thereof are disclosed in Tables 11 to 13 below. The listed weight percentages are based on the total weight of the different formulations.

The fully formulated industrial gear oil (IGO) composition according ISO VG 68 used in Table 10 comprises
79.5 wt% Nexbase^{®} 3060 (Base oil)
18.0 wt% VISCOBASE^{®} 5-220 (Base oil)
0.7 wt% PPD
1.8 wt% ADDITIN^{®} RC9420 (DI package)
0.2 wt% VISCOPLEX^{®} 14-520 (defoamer).

**Table 10: Lubricating oil formulations according to the invention.**

| | Particle concentration in formulation | Lubricant | Dispersion IE1 |
|---|---|---|---|
| Formulation 1 | 0.5 wt% | 95 wt% Nexbase^{®} 3043 | 5.0 wt% |
| Formulation 2 | 0.5 wt% | 95 wt% 0W-16 engine oil | 5.0 wt% |
| Formulation 3 | 0.5 wt% | 95 wt% ISO VG 68 IGO oil | 5.0 wt% |

To express in % the friction reduction, a quantifiable result can be expressed as a number and is obtained by integration of the friction value curves using the obtained corresponding Stribeck curves in the range of sliding speed 5 mm/s - 60 mm/s using the trapezoidal rule. The area corresponds to the "total friction" over the selected speed regime. The smaller the area, the greater the friction-reducing effect of the product examined. The percentage friction reductions were calculated by using the values of the reference oil Nexbase^{®} 3043, which generates an area of friction of 6.32 mm/s. Positive values indicate a decrease of friction coefficients. Values in relation to the reference oil are compiled in Tables 11-13 below.

**Table 11: Friction reduction in boundary regime for the formulation according to the invention compared to base oil.**

| **Example** | **Friction area from 5-60 mm/s** | **Reduction of Friction in %** |
|---|---|---|
| Reference Nexbase^{®} 3043 | 6.32 | 0 |
| Formulation 1 | 2.85 | 54.8 |

**Table 12: Friction reduction in boundary regime for the formulation (top up on genuine engine oil 0W-16) according to the invention compared to genuine engine oil 0W-16 alone.**

| **Example** | **Friction area from 5-60 mm/s** | **Reduction of Friction in %** |
|---|---|---|
| Reference 0W-16 engine oil | 3.80 | 0 |
| Formulation 2 | 2.57 | 32.3 |

**Table 13: Friction reduction in boundary regime for the formulation (top up on fully formulated industrial gear oil ISO VG 68) according to the invention compared to fully formulated industrial gear oil ISO VG 68.**

| **Example** | **Friction area from 5-60 mm/s** | **Reduction of Friction in %** |
|---|---|---|
| Reference fully formulated ISO VG 68 IGO | 4.99 | 0 |
| Formulation 3 | 2.49 | 50.1 |

The experimental results show great friction reduction performance in comparison to the base oil reference. Indeed, the results of the calculated total friction in the range of sliding speed 5 mm/s - 60mm/s clearly show that the lubricating oil formulations comprising the nanoparticle compositions according to the invention strongly improve the reduction in friction.

### Determination of the wear reduction in 4ball wear test according DIN 51315-2

The same lubricating oil formulation 1 as used for the friction tests shows a diameter of the callotes on the state balls of 0.496 mm. Compared to the reference Nexbase^{®} 3043 oil alone the graphene dispersion decreases the wear by 41.2 %.

The tribological results show that the graphene compositions of the present invention have not only a great anti-friction performance but also very good anti-wear properties thanks to highly stable dispersions over a long period of time.

It has been found that the nanoparticle composition of the present invention can comprise high concentrations of graphene particles (even at 10 wt% concentration) without having any problem of stability (agglomeration or viscosity increase in oil), while maintaining good friction and wear reduction properties. The graphene nanoparticles having both the BET and G/D ratio within the ranges as defined in claim 1 outperform any other tested graphene nanoparticles not fulfilling the BET and G/D ratio requirements of the invention in terms of dispersion stability. Indeed, the graphene nanoparticles not fulfilling the BET and G/D ratio requirements of the invention lead to a viscosity increase and sedimentation when dispersed in oil (comparative dispersion examples C8 and C9).

## Claims

1. Nanoparticle composition comprising one or more graphene nanoparticle (A), one or more polymer (B), one or more silane compound (C) and one or more base fluid (D), wherein
(A) the one or more nanoparticle (A) is a multilayered graphene-based material containing oxygen groups, with a surface area BET between 200 m²/g and 1,500 m²/g, and G/D ratio between 0.5 and 2 in accordance with ISO/TS 80004-13,
(B) the one or more polymer (B) is obtainable by polymerizing a monomer composition comprising:
a) 1 to 30 % by weight, based on the total weight of the monomer composition, of one or more functional monomer selected from the list consisting of:
a1) aminoalkyl (meth)acrylates and aminoalkyl (meth)acrylamides;
a2) nitriles of alkyl (meth)acrylic acid and other nitrogen-containing alkyl (meth)acrylates;
a3) (meth)acrylates of ether alcohols;
a4) oxiranyl alkyl (meth)acrylate;
a5) phosphorus-, boron- and/or silicon-containing alkyl (meth)acrylates;
a6) heterocyclic alkyl (meth)acrylates;
a7) vinyl halides;
a8) vinyl esters;
a9) vinyl monomers containing aromatic groups;
a10) heterocyclic vinyl compounds;
a11) vinyl and isoprenyl ethers;
a12) methacrylic acid and acrylic acid, and
b) 30 to 70% by weight of one or more alkyl (meth)acrylate monomer, wherein each of the alkyl group of the one or more alkyl (meth)acrylate monomer is independently linear, cyclic or branched and comprises from 1 to 40 carbon atoms, based on the total weight of the monomer composition, and
c) 20 to 60 % by weight of one or more polybutadiene-based macromonomer having a number-average molecular weight (Mₙ) of 500 to 10,000 g/mol, based on the total weight of the monomer composition,
(C) 0.02 to 5 % by weight, based on the total weight of the nanoparticle composition, of the one or more silane compound (C) of formula (IV)
**Si(R)(M)ₕ(X)₃₋ₕ** (IV)
where 0 ≤ h ≤ 2; preferably h is 0,
M is a branched or linear C₁ to C₄ alkyl residue,
R is a branched or linear, aliphatic, aromatic or mixed aliphatic-aromatic C₁ to C₃₀ carbon-based group, or R is a branched or linear, aliphatic, aromatic or mixed aliphatic-aromatic C₁ to C₃₀ carbon-based group with a functional group selected from carboxy, carbonyl, hydroperoxycarbonyl, cyan, formyl, oxo, thioxo, hydroxy, amino, imino, hydrazino, epoxy; preferably R is selected from a linear aliphatic C₈ carbon-based group, a linear aliphatic C₁₆ carbon-based group, a linear aliphatic 3-aminopropyl group, or a 3-glycidyloxypropyl group,
X is selected from H, Cl or a group OY , wherein Y is H or a C₁ to C₈ branched or linear alkyl-, alkenyl-, aryl-, or aralkyl- group, branched or linear C₂ to C₈ alkylether-group or a mixture thereof; preferably X is methoxy or ethoxy,
wherein the nanoparticle composition is obtainable by milling the nanoparticle composition, preferably via a ball mill process.

2. The nanoparticle composition according to claim 1, wherein the one or more polybutadiene-based macromonomer c) has a number-average molecular weight (Mn) of 1,500 to 7,500 g/mol, preferably of 3,500 to 7,000 g/mol, more preferably 4,000 to 6,000 g/mol, even more preferably 4,500 to 5,500 g/mol.

3. The nanoparticle composition according to claim 1 or 2, wherein the one or more polymer (B) has a weight-average molecular weight (Mw) of 10,000 to 1,000,000 g/mol, more preferably 50,000 to 800,000 g/mol, even more preferably 100,000 to 500,000 g/mol, most preferably 150,000 to 350,000 g/mol.

4. The nanoparticle composition according to any one of claims 1 to 3, wherein the one or more polymer (B) is obtainable by polymerizing a monomer composition comprising:
a) 1 to 30 % by weight, preferably 5 to 30 % by weight, more preferably 10 to 20 % by weight of the one or more functional monomer as component a), based on the total weight of the monomer composition; and
b1) 30 to 60 % by weight, preferably 30 to 50 % by weight, more preferably 35 to 50 % by weight of one or more alkyl (meth)acrylate of formula (I), as first component b): 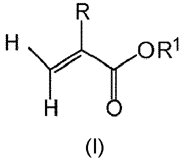 wherein R is hydrogen or methyl, R¹ means a linear, branched or cyclic alkyl residue with 1 to 8 carbon atoms, preferably 1 to 5 carbon atoms, and more preferably 1 to 4 carbon atoms, based on the total weight of the monomer composition; and
b2) 0 to 20 % by weight, preferably 1 to 15 % by weight, more preferably 1 to 10 % by weight of one or more alkyl (meth)acrylate of formula (II), as second component b): 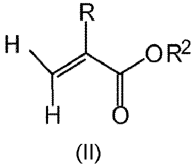 wherein R is hydrogen or methyl, R² means a linear, branched or cyclic alkyl residue with 9 to 15 carbon atoms, preferably 12 to 15 carbon atoms, and more preferably 12 to 14 carbon atoms, based on the total weight of the monomer composition; and
b3) 0 to 20 % by weight, preferably 0 to 15 % by weight, more preferably 0 to 10 % by weight of one or more alkyl (meth)acrylate of formula (III), as third component b): 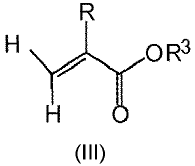 wherein R is hydrogen or methyl, R³ means a linear, branched or cyclic alkyl residue with 16 to 40 carbon atoms, preferably 16 to 30 carbon atoms, and more preferably 6 to 20 carbon atoms, based on the total weight of the monomer composition; and
c) 20 to 60 % by weight, more preferably 20 to 50 % by weight, more preferably 30 to 50 % by weight of one or more polybutadiene-based macromonomer having a number-average molecular weight (Mₙ) of 500 to 10,000 g/mol, based on the total weight of the monomer composition.

5. The nanoparticle composition according to any one of claims 1 to 4, wherein the one or more polymer compound (B) is obtainable by polymerizing a monomer composition comprising:
a1) 0.5 to 5 % by weight of an aminoalkyl (meth)acrylamide, most preferably N-(3-dimethyl-aminopropyl)methacrylamide, as first component a), based on the total weight of the monomer composition;
a9) 5 to 15 % by weight of a vinyl monomer containing aromatic groups, most preferably styrene, as second component a), based on the total weight of the monomer composition;
b1) 35 to 50 % by weight of an alkyl (meth)acrylate monomer of formula (I), most preferably methyl methacrylate and/or butyl methacrylate, as first component b), based on the total weight of the monomer composition;
b2) 1 to 10 % by weight of an alkyl (meth)acrylate monomer of formula (II), most preferably lauryl methacrylate, as second component b), based on the total weight of the monomer composition;
c) 30 to 50 % by weight of one or more polybutadiene-based macromonomer having a number-average molecular weight (Mₙ) of 500 to 10,000 g/mol, most preferably a macromonomer derived from the reaction of an ester of a (meth)acrylic acid and a hydroxylated hydrogenated polybutadiene having a number-average molecular weight (Mₙ) of 1,500 to 5,500 g/mol, as component c), based on the total weight of the monomer composition.

6. The nanoparticle composition according to any one of claims 1 to 5, wherein the weight contents of monomers a), b) and c) of the monomer composition sum up to 100 % by weight, based on the total weight of the monomer composition.

7. The nanoparticle composition according to any one of claims 1 to 6, wherein the one or more silane compound (C) of formula (IV) is octyltrimethoxysilane, hexadecyltrimethoxysilane, 3-aminopropyltriethoxysilane or 3-glycidyloxypropyltriethoxysilane.

8. The nanoparticle composition according to any one of claims 1 to 7, wherein the nanoparticle composition comprises:
1 to 20 % by weight of one or more nanoparticle (A),
0.5 to 30 % by weight of one or more polymer (B),
0.02 to 5 % by weight of one or more silane compound (C),
45 to 98.48 % by weight of one or more base fluid (D),
based on the total weight of the nanoparticle composition.

9. The nanoparticle composition according to claim 8, wherein the weight contents of components A), B), C) and D) sum up to 100 % by weight, based on the total weight of the nanoparticle composition.

10. A process for preparing the nanoparticle composition as defined in any one of claims 1 to 9, wherein the process comprises the following steps
(i) providing one or more nanoparticle compound (A) as defined herein;
(ii) providing one or more polymer compound (B) as defined herein;
(iii) providing one or more silane compound (C) as defined herein;
(iv) providing one or more base fluid (D) as defined herein;
(v) combining (A) to (D) to obtain a mixture; and
(vi) milling the mixture of step (v).

11. The process according to claim 10, wherein in step (v) the compounds (A) and (C) are first mixed together by spraying or ball milling and then mixed with (B) and (D).

12. Lubricating oil composition comprising the nanoparticle composition as defined in any one of claims 1 to 9 and one or more base fluid (E).

13. The lubricating oil composition according to claim 12, wherein the lubricating oil composition further comprises one or more additive component (F) selected from the group consisting of antioxidants, anti-wear additives, pour point depressants, corrosion inhibitors, metal passivators or electrostatic discharge depressants, defoaming agents, seal fix or seal compatibility agents, or a mixture thereof.

14. The lubricating oil composition according to claim 12 or 13, wherein the lubricating oil composition comprises 50 to 99.99 % by weight of base oil (E), 0.01 to 50 % by weight of the nanoparticle composition and 0 to 20 % by weight of one or more additive component (F), based on the total weight of the lubricating oil composition.

15. Use of the nanoparticle composition as defined in any one of the previous claims 1 to 9 as a lubricant additive in a lubricating oil composition, preferably in a gear oil composition, a transmission oil composition, a hydraulic oil composition, an engine oil composition, a marine oil composition, an industrial lubricating oil composition or in grease.

## Patentansprüche

1. Nanopartikelzusammensetzung, umfassend ein oder mehrere Graphen-Nanopartikel (A), ein oder mehrere Polymere (B), eine oder mehrere Silanverbindungen (C) und ein oder mehrere Grundöle (D), wobei
(A) es sich bei dem einen oder den mehreren Nanopartikeln (A) um ein mehrschichtiges, Sauerstoffgruppen enthaltendes Material auf Graphenbasis mit einer BET-Oberfläche zwischen 200 m²/g und 1500 m²/g und einem G/D-Verhältnis zwischen 0,5 und 2 gemäß ISO/TS 80004-13 handelt,
(B) das eine oder die mehreren Polymere (B) erhältlich sind durch Polymerisieren einer Monomerzusammensetzung umfassend:
a) 1 bis 30 Gew.-%, bezogen auf das Gesamtgewicht der Monomerzusammensetzung, eines oder mehrerer funktioneller Monomere ausgewählt aus der Gruppe bestehend aus:
a1) Aminoalkyl(meth)acrylaten und Aminoalkyl(meth)acrylamiden;
a2) Nitrilen von Alkyl(meth)acrylsäure und anderen stickstoffhaltigen Alkyl(meth)acrylaten;
a3) (Meth)acrylaten von Etheralkoholen;
a4) Oxiranylalkyl(meth)acrylat;
a5) phosphor-, bor- und/oder siliciumhaltigen Alkyl(meth)acrylaten;
a6) heterocyclischen Alkyl(meth)acrylaten;
a7) Vinylhalogeniden;
a8) Vinylestern;
a9) Vinylmonomeren mit aromatischen Gruppen;
a10) heterocyclischen Vinylverbindungen;
a11) Vinyl- und Isoprenylethern;
a12) Methacrylsäure und Acrylsäure und
b) 30 bis 70 Gew.-%, bezogen auf das Gesamtgewicht der Monomerzusammensetzung, eines oder mehrerer Alkyl(meth)acrylatMonomere, wobei die Alkylgruppen des einen oder der mehreren Alkyl(meth)acrylat-Monomere jeweils unabhängig geradkettig, cyclisch oder verzweigt sind und 1 bis 40 Kohlenstoffatome umfassen, und
c) 20 bis 60 Gew.-%, bezogen auf das Gesamtgewicht der Monomerzusammensetzung, eines oder mehrerer Makromonomere auf Polybutadienbasis mit einem zahlenmittleren Molekulargewicht (Mₙ) von 500 bis 10000 g/mol,
(C) 0,02 bis 5 Gew.-%, bezogen auf das Gesamtgewicht der Nanopartikelzusammensetzung, der einen oder der mehreren Silanverbindungen (C) der Formel (IV) **S**
**i(R)(M)ₕ(X)₃₋ₕ** (IV)
wobei 0 ≤ h ≤ 2 und h vorzugsweise für 0 steht, M für einen verzweigten oder geradkettigen C₁-bis C₄-Rest steht, R für eine verzweigte oder geradkettige, aliphatische, aromatische oder gemischt aliphatisch-aromatische C₁- bis C₃₀-Gruppe auf Kohlenstoffbasis steht oder R für eine verzweigte oder geradkettige, aliphatische, aromatische oder gemischt aliphatisch-aromatische C₁- bis C₃₀-Gruppe auf Kohlenstoffbasis mit einer funktionellen Gruppe ausgewählt aus Carboxy, Carbonyl, Hydroperoxycarbonyl, Cyan, Formyl, Oxo, Thioxo, Hydroxy, Amino, Imino, Hydrazino, Epoxy steht; R vorzugsweise aus einer geradkettigen aliphatischen C₈-Gruppe auf Kohlenstoffbasis, einer geradkettigen aliphatischen C₁₆-Gruppe auf Kohlenstoffbasis, einer geradkettigen aliphatischen 3-Aminopropylgruppe oder einer 3-Glycidyloxypropylgruppe ausgewählt ist, X aus H, Cl oder einer Gruppe OY ausgewählt ist, wobei Y für H oder eine verzweigte oder geradkettige C₁- bis C₈-Alkyl-, Alkenyl-, Aryl-oder Aralkylgruppe, eine verzweigte oder geradkettige C₂- bis C₈-Alkylethergruppe oder eine Mischung davon steht; X vorzugsweise für Methoxy oder Ethoxy steht,
wobei man die Nanopartikelzusammensetzung erhält, indem man die Nanopartikelzusammensetzung mahlt, vorzugsweise in einem Kugelmühlenprozess.

2. Nanopartikelzusammensetzung nach Anspruch 1, wobei das eine oder die mehreren Makromonomere c) auf Polybutadienbasis ein zahlenmittleres Molekulargewicht (Mₙ) von 1500 bis 7500 g/mol, vorzugsweise 3500 bis 7000 g/mol, besonders bevorzugt 4000 bis 6000 g/mol, noch mehr bevorzugt 4500 bis 5500 g/mol haben.

3. Nanopartikelzusammensetzung nach Anspruch 1 oder 2, wobei das eine oder die mehreren Polymere (B) ein gewichtsmittleres Molekulargewicht (Mw) von 10000 bis 1000000 g/mol, besonders bevorzugt 50000 bis 800000 g/mol, noch mehr bevorzugt 100000 bis 500000 g/mol, am meisten bevorzugt 150000 bis 350000 g/mol haben.

4. Nanopartikelzusammensetzung nach einem der Ansprüche 1 bis 3, wobei das eine oder die mehreren Polymere (B) erhältlich sind durch Polymerisieren einer Monomerzusammensetzung umfassend:
a) 1 bis 30 Gew.-%, vorzugsweise 5 bis 30 Gew.-%, besonders bevorzugt 10 bis 20 Gew.-%, bezogen auf das Gesamtgewicht der Monomerzusammensetzung, des einen oder der mehreren funktionellen Monomere als Komponente a); und
b1) 30 bis 60 Gew.-%, vorzugsweise 30 bis 50 Gew.-%, besonders bevorzugt 35 bis 50 Gew.-%, bezogen auf das Gesamtgewicht der Monomerzusammensetzung, eines oder mehrerer Alkyl(meth)acrylate der Formel (I) als erste Komponente b): 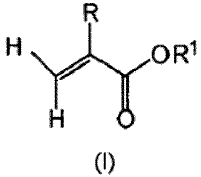 wobei R für Wasserstoff oder Methyl steht, R¹ für einen geradkettigen, verzweigten oder cyclischen Alkylrest mit 1 bis 8 Kohlenstoffatomen, vorzugsweise 1 bis 5 Kohlenstoffatomen und besonders bevorzugt 1 bis 4 Kohlenstoffatomen steht, und
b2) 0 bis 20 Gew.-%, vorzugsweise 1 bis 15 Gew.-%, besonders bevorzugt 1 bis 10 Gew.-%, bezogen auf das Gesamtgewicht der Monomerzusammensetzung, eines oder mehrerer Alkyl(meth)acrylate der Formel (II) als zweite Komponente b): 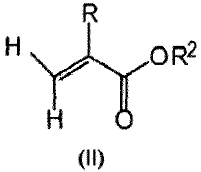 wobei R für Wasserstoff oder Methyl steht, R² für einen geradkettigen, verzweigten oder cyclischen Alkylrest mit 9 bis 15 Kohlenstoffatomen, vorzugsweise 12 bis 15 Kohlenstoffatomen und besonders bevorzugt 12 bis 14 Kohlenstoffatomen steht, und
b3) 0 bis 20 Gew.-%, vorzugsweise 0 bis 15 Gew.-%, besonders bevorzugt 1 bis 10 Gew.-%, bezogen auf das Gesamtgewicht der Monomerzusammensetzung, eines oder mehrerer Alkyl(meth)acrylate der Formel (III) als dritte Komponente b): 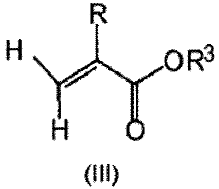 wobei R für Wasserstoff oder Methyl steht, R³ für einen geradkettigen, verzweigten oder cyclischen Alkylrest mit 16 bis 40 Kohlenstoffatomen, vorzugsweise 16 bis 30 Kohlenstoffatomen und besonders bevorzugt 6 bis 20 Kohlenstoffatomen steht, und
c) 20 bis 60 Gew.-%, besonders bevorzugt 20 bis 50 Gew.-%, weiter bevorzugt 30 bis 50 Gew.-%, bezogen auf das Gesamtgewicht der Monomerzusammensetzung, eines oder mehrerer Makromonomere auf Polybutadienbasis mit einem zahlenmittleren Molekulargewicht (Mₙ) von 500 bis 10000 g/mol.

5. Nanopartikelzusammensetzung nach einem der Ansprüche 1 bis 4, wobei das eine oder die mehreren Polymere (B) erhältlich sind durch Polymerisieren einer Monomerzusammensetzung umfassend:
a1) 0,5 bis 5 Gew.-%, bezogen auf das Gesamtgewicht der Monomerzusammensetzung, eines Aminoalkyl(meth)acrylamids, am meisten bevorzugt N-(3-Dimethylaminopropyl)methacrylamid, als erste Komponente a);
a9) 5 bis 15 Gew.-%, bezogen auf das Gesamtgewicht der Monomerzusammensetzung, eines Vinylmonomeren mit aromatischen Gruppen, am meisten bevorzugt Styrol, als zweite Komponente a);
b1) 35 bis 50 Gew.-%, bezogen auf das Gesamtgewicht der Monomerzusammensetzung, eines Alkyl(meth)acrylatmonomers der Formel (I), am meisten bevorzugt Methylmethacrylat und/oder Butylmethacrylat, als erste Komponente b) ;
b2) 1 bis 10 Gew.-%, bezogen auf das Gesamtgewicht der Monomerzusammensetzung, eines Alkyl(meth)acrylatmonomers der Formel (II), am meisten bevorzugt Laurylmethacrylat, als zweite Komponente b) ;
c) 30 bis 50 Gew.-%, bezogen auf das Gesamtgewicht der Monomerzusammensetzung, eines oder mehrerer Makromonomere auf Polybutadienbasis mit einem zahlenmittleren Molekulargewicht (Mₙ) von 500 bis 10000 g/mol, am meisten bevorzugt eines Makromonomers, das aus der Reaktion eines Esters einer (Meth)acrylsäure und eines hydroxylierten hydrierten Polybutadiens mit einem zahlenmittleren Molekulargewicht (Mₙ) von 1500 bis 5500 g/mol stammt, als Komponente c).

6. Nanopartikelzusammensetzung nach einem der Ansprüche 1 bis 5, wobei die Summe der Gewichtsanteile der Monomere a), b) und c) der Monomerzusammensetzung, bezogen auf das Gesamtgewicht der Monomerzusammensetzung, 100 Gew.-% beträgt.

7. Nanopartikelzusammensetzung nach einem der Ansprüche 1 bis 6, wobei die eine oder die mehreren Silanverbindungen (C) der Formel (IV) Octyltrimethoxysilan, Hexadecyltrimethoxysilan, 3-Aminopropyltriethoxysilan oder 3-Glycidyloxypropyltriethoxysilan ist.

8. Nanopartikelzusammensetzung nach einem der Ansprüche 1 bis 7, wobei die Nanopartikelzusammensetzung Folgendes umfasst:
1 bis 20 Gew.-% eines oder mehrerer Nanopartikel (A),
0,5 bis 30 Gew.-% eines oder mehrerer Polymere (B),
0,02 bis 5 Gew.-% einer oder mehrerer Silanverbindungen (C),
45 bis 98,48 Gew.-% eines oder mehrerer Grundöle (D),
bezogen auf das Gesamtgewicht der Nanopartikelzusammensetzung.

9. Nanopartikelzusammensetzung nach Anspruch 8, wobei die Summe der Gewichtsanteile der Komponenten A), B), C) und D), bezogen auf das Gesamtgewicht der Nanopartikelzusammensetzung, 100 Gew.-% beträgt.

10. Verfahren zur Herstellung der wie in einem der Ansprüche 1 bis 9 definierten Nanopartikelzusammensetzung, wobei das Verfahren die folgenden Schritte umfasst:
(i) die Bereitstellung einer oder mehrerer wie hier definierter Nanopartikelverbindungen (A),
(ii) die Bereitstellung einer oder mehrerer wie hier definierter Polymerverbindungen (B),
(iii) die Bereitstellung einer oder mehrerer wie hier definierter Silanverbindungen (C),
(iv) die Bereitstellung einer oder mehrerer wie hier definierter Grundöle (D),
(v) das Kombinieren von (A) bis (D) unter Erhalt einer Mischung und
(vi) das Mahlen der Mischung von Schritt (v).

11. Verfahren nach Anspruch 10, wobei in Schritt (v) die Verbindungen (A) und (C) zunächst durch Sprühen oder Vermahlen in einer Kugelmühle miteinander gemischt werden und dann mit (B) und (D) gemischt werden.

12. Schmierölzusammensetzung, umfassend die wie in einem der Ansprüche 1 bis 9 definierte Nanopartikelzusammensetzung und ein oder mehrere Grundöle (E).

13. Schmierölzusammensetzung nach Anspruch 12, wobei die Schmierölzusammensetzung weiterhin eine oder mehrere Zusatzstoffkomponenten (F) ausgewählt aus der Gruppe bestehend aus Antioxidationsmitteln, Antiverschleißadditiven, Stockpunkterniedrigern, Korrosionshemmern, Metallpassivatoren bzw. Mitteln zum Herabsetzen des Risikos elektrostatischer Entladungen, Antischaummitteln, abdichtenden bzw. Dichtungskompatibilitätsmitteln oder einer Mischung davon umfasst.

14. Schmierölzusammensetzung nach Anspruch 12 oder 13, wobei die Schmierölzusammensetzung 50 bis 99,99 Gew.-% Grundöl (E), 0,01 bis 50 Gew.-% Nanopartikelzusammensetzung und 0 bis 20 Gew.-% einer oder mehrerer Komponenten (F) umfasst, bezogen auf das Gesamtgewicht der Schmierölzusammensetzung.

15. Verwendung der wie in einem der vorhergehenden Ansprüche 1 bis 9 definierten Nanopartikelzusammensetzung als Schmiermittelzusatz in einer Schmierölzusammensetzung, vorzugsweise in einer Getriebeölzusammensetzung, einer Transmissionsölzusammensetzung, einer Hydraulikölzusammensetzung, einer Motorölzusammensetzung, einer Schiffsölzusammensetzung, einer industriellen Schmierölzusammensetzung oder in Schmierfett.

## Revendications

1. Composition de nanoparticules comprenant une ou plusieurs nanoparticules de graphène (A), un ou plusieurs polymères (B), un ou plusieurs composés de type silane (C) et un ou plusieurs fluides de base (D),
(A) la ou les nanoparticules (A) étant un matériau à base de graphène multicouche contenant des groupes oxygène, doté d'une superficie BET comprise entre 200 m²/g et 1 500 m²/g, et d'un rapport G/D compris entre 0,5 et 2 conformément à la norme ISO/TS 80004-13,
(B) le ou les polymères (B) pouvant être obtenus par polymérisation d'une composition de monomères comprenant :
a) 1 à 30 % en poids, sur la base du poids total de la composition de monomères, d'un ou plusieurs monomères fonctionnels choisis dans la liste constituée par :
a1) des (méth)acrylates d'aminoalkyle et des (méth)acrylamides d'aminoalkyle ;
a2) des nitriles d'acide alkyl(méth)acrylique et d'autres (méth)acrylates d'alkyle contenant de l'azote ;
a3) des (méth)acrylate d'alcools d'éther ;
a4) un (méth)acrylate d'oxiranyl-alkyle ;
a5) des (méth)acrylates d'alkyle contenant du phosphore, du bore et/ou du silicium ;
a6) des (méth)acrylates d'alkyle hétérocycliques ;
a7) des halogénures de vinyle ;
a8) des esters de vinyle ;
a9) des monomères vinyliques contenant des groupes aromatiques ;
a10) des composés vinyliques hétérocycliques ;
a11) des éthers de vinyle et d'isoprényle ;
a12) l'acide méthacrylique et l'acide acrylique, et
b) 30 à 70 % en poids d'un ou plusieurs monomères de type (méth)acrylate d'alkyle, chacun des groupes alkyle du ou des monomères de type (méth)acrylates d'alkyle étant indépendamment linéaire, cyclique ou ramifié et comprenant de 1 à 40 atomes de carbone, sur la base du poids total de la composition de monomères, et
c) 20 à 60 % en poids d'un ou plusieurs macromonomères à base de polybutadiène possédant un poids moléculaire moyen en nombre (Mₙ) de 500 à 10 000 g/mole, sur la base du poids total de la composition de monomères,
(C) 0,02 à 5 % en poids, sur la base du poids total de la composition de nanoparticules, du des composés (C) de type silane de formule (IV)
**Si(R)(M)ₕ(X)₃₋ₕ** **(IV)**
où 0 ≤ h ≤ 2 ; préférablement h est 0,
M est un radical alkyle ramifié ou linéaire en C₁ à C₄,
R est un groupe à base de carbone en C₁ à C₃₀, ramifié ou linéaire, aliphatique, aromatique ou mixte aliphatique-aromatique, ou R est un groupe à base de carbone en C₁ à C₃₀, ramifié ou linéaire, aliphatique, aromatique ou mixte aliphatique-aromatique comportant un groupe fonctionnel choisi parmi carboxy, carbonyle, hydroperoxycarbonyle, cyano, formyle, oxo, thioxo, hydroxy, amino, imino, hydrazino, époxy ; préférablement R est choisi parmi un groupe à base de carbone en C₈ aliphatique linéaire, un groupe à base de carbone en C₁₆ aliphatique linéaire, un groupe 3-aminopropyle aliphatique linéaire ou un groupe 3-glycidyloxypropyle,
X est choisi parmi H, Cl et un groupe OY, Y étant H ou un groupe alkyle, alcényle, aryle ou aralkyle, ramifié ou linéaire, en C₁ à C₈, un groupe alkyléther ramifié ou linéaire en C₂ à C₈ ou un mélange correspondant ; préférablement X étant méthoxy ou éthoxy,
la composition de nanoparticules pouvant être obtenue par broyage de la composition de nanoparticules, préférablement via un procédé de broyage à billes.

2. Composition de nanoparticules selon la revendication 1, le ou les macromonomères c) à base de polybutadiène possédant un poids moléculaire moyen en nombre (Mn) de 1 500 à 7 500 g/mole, préférablement de 3 500 à 7 000 g/mole, plus préférablement de 4 000 à 6 000 g/mole, encore plus préférablement de 4 500 à 5 500 g/mole.

3. Composition de nanoparticules selon la revendication 1 ou 2, le ou les polymères (B) possédant un poids moléculaire moyen en poids (Mw) de 10 000 à 1 000 000 g/mole, plus préférablement de 50 000 à 800 000 g/mole, encore plus préférablement de 100 000 à 500 000 g/mole, le plus préférablement de 150 000 à 350 000 g/mole.

4. Composition de nanoparticules selon l'une quelconque des revendications 1 à 3, le ou les polymères (B) pouvant être obtenus par polymérisation d'une composition de monomères comprenant :
a) 1 à 30 % en poids, préférablement 5 à 30 % en poids, plus préférablement 10 à 20 % en poids du ou des monomères fonctionnels en tant que composant a), sur la base du poids total de la composition de monomères ; et
b1) 30 à 60 % en poids, préférablement 30 à 50 % en poids, plus préférablement 35 à 50 % en poids d'un ou plusieurs (méth)acrylates d'alkyle de formule (I), en tant que premier composant b) : 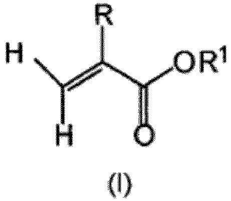 R étant hydrogène ou méthyle, R¹ signifiant un radical alkyle linéaire, ramifié ou cyclique comportant 1 à 8 atomes de carbone, préférablement 1 à 5 atomes de carbone et plus préférablement 1 à 4 atomes de carbone, sur la base du poids total de la composition de monomères ; et
b2) 0 à 20 % en poids, préférablement 1 à 15 % en poids, plus préférablement 1 à 10 % en poids d'un ou plusieurs (méth)acrylates d'alkyle de formule (II), en tant que deuxième composant b) : 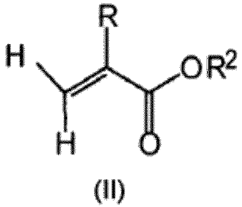 R étant hydrogène ou méthyle, R² signifiant un radical alkyle linéaire, ramifié ou cyclique comportant 9 à 15 atomes de carbone, préférablement 12 à 15 atomes de carbone, et plus préférablement 12 à 14 atomes de carbone, sur la base du poids total de la composition de monomères ; et
b3) 0 à 20 % en poids, préférablement 0 à 15 % en poids, plus préférablement 0 à 10 % en poids d'un ou plusieurs (méth)acrylates d'alkyle de formule (III), en tant que troisième composant b) : 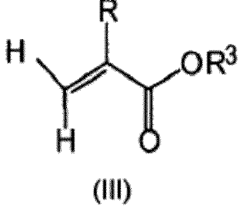 R étant hydrogène ou méthyle, R³ signifiant un radical alkyle linéaire, ramifié ou cyclique comportant 16 à 40 atomes de carbone, préférablement 16 à 30 atomes de carbone, et plus préférablement 6 à 20 atomes de carbone, sur la base du poids total de la composition de monomères ; et
c) 20 à 60 % en poids, plus préférablement 20 à 50 % en poids, plus préférablement 30 à 50 % en poids d'un ou plusieurs macromonomères à base de polybutadiène possédant un poids moléculaire moyen en nombre (Mₙ) de 500 à 10 000 g/mole, sur la base du poids total de la composition de monomères.

5. Composition de nanoparticules selon l'une quelconque des revendications 1 à 4, le ou les composés (B) de type polymère pouvant être obtenus par polymérisation d'une composition de monomères comprenant :
a1) 0,5 à 5 % en poids d'un aminoalkyl-(méth)acrylamide, le plus préférablement le N-(3-diméthyl-aminopropyl)méthacrylamide, en tant que premier composant a), sur la base du poids total de la composition de monomères ;
a9) 5 à 15 % en poids d'un monomère vinylique contenant des groupes aromatiques, le plus préférablement le styrène, en tant que deuxième composant a), sur la base du poids total de la composition de monomères ;
b1) 35 à 50 % en poids d'un monomère de type (méth)acrylate d'alkyle de formule (I), le plus préférablement le méthacrylate de méthyle et/ou le méthacrylate de butyle, en tant que premier composant b) , sur la base du poids total de la composition de monomères,
b2) 1 à 10 % en poids d'un monomère de type (méth)acrylate d'alkyle de formule (II), le plus préférablement le méthacrylate de lauryle, en tant que deuxième composant b), sur la base du poids total de la composition de monomères,
c) 30 à 50 % en poids d'un ou plusieurs macromonomères à base de polybutadiène possédant un poids moléculaire moyen en nombre (Mₙ) de 500 à 10 000 g/mole, le plus préférablement un macromonomère issu de la réaction d'un ester d'un acide (méth)acrylique et d'un polybutadiène hydrogéné hydroxylé possédant un poids moléculaire moyen en nombre (Mₙ) de 1 500 à 5 500 g/mole, en tant que composant c), sur la base du poids total de la composition de monomères.

6. Composition de nanoparticules selon l'une quelconque des revendications 1 à 5, les teneurs en poids des monomères a), b) et c) de la composition de monomères totalisant 100 % en poids, sur la base du poids total de la composition de monomères.

7. Composition de nanoparticules selon l'une quelconque des revendications 1 à 6, le ou les composés (C) de type silane de formule (IV) étant l'octyltriméthoxysilane, l'hexadécyltriméthoxysilane, le 3-aminopropyltriéthoxysilane ou le 3-glycidyloxypropyltriéthoxysilane.

8. Composition de nanoparticules selon l'une quelconque des revendications 1 à 7, la composition de nanoparticules comprenant :
1 à 20 % en poids d'une ou plusieurs nanoparticules (A),
0,5 à 30 % en poids d'un ou plusieurs polymères (B),
0, 02 à 5 % en poids d'un ou plusieurs composés (C) de type silane,
45 à 98,48 % en poids d'un ou plusieurs fluides de base (D),
sur la base du poids total de la composition de nanoparticules.

9. Composition de nanoparticules selon la revendication 8, les teneurs en poids des composants A), B), C) et D) totalisant 100 % en poids, sur la base du poids total de la composition de nanoparticules.

10. Procédé pour la préparation de la composition de nanoparticules telle que définie dans l'une quelconque des revendications 1 à 9, le procédé comprenant les étapes suivantes
(i) mise à disposition d'un ou plusieurs composés (A) de type nanoparticule tels que définie ici ;
(ii) mise à disposition d'un ou plusieurs composés (B) de type polymère tels que définis ici ;
(iii) mise à disposition d'un ou plusieurs composés (C) de type silane tels que définis ici ;
(iv) mise à disposition d'un ou plusieurs fluides de base (D) tels que définis ici ;
(v) combinaison de (A) à (D) pour obtenir un mélange ; et
(vi) broyage du mélange de l'étape (v).

11. Procédé selon la revendication 10, dans lequel dans l'étape (v) les composés (A) et (C) sont d'abord mélangés ensemble par pulvérisation ou broyage à billes et ensuite mélangés avec (B) et (D).

12. Composition d'huile lubrifiante comprenant la composition de nanoparticules telle que définie dans l'une quelconque des revendications 1 à 9 et un ou plusieurs fluides de base (E).

13. Composition d'huile lubrifiante selon la revendication 12, la composition d'huile lubrifiante comprenant en outre un ou plusieurs composants (F) de type additif choisis dans le groupe constitué par des antioxydants, des additifs anti-usure, des agents d'abaissement du point d'écoulement, des inhibiteurs de corrosion, des agents de passivation de métal ou des agents d'abaissement de décharge électrostatique, des agents antimousse, des agents de fixage de joint ou de compatibilité de joint, ou un mélange correspondant.

14. Composition d'huile lubrifiante selon la revendication 12 ou 13, la composition d'huile lubrifiante comprenant 50 à 99,99 % en poids d'huile de base (E), 0,01 à 50 % en poids de la composition de nanoparticules et 0 à 20 % en poids d'un ou plusieurs composants (F) de type additif, sur la base du poids total de la composition d'huile lubrifiante.

15. Utilisation de la composition de nanoparticules telle que définie dans l'une quelconque des revendications précédentes 1 à 9 en tant qu'additif lubrifiant dans une composition d'huile lubrifiante, préférablement dans une composition d'huile pour engrenage, une composition d'huile de transmission, une composition d'huile hydraulique, une composition d'huile de moteur, une composition d'huile marine, une composition d'huile lubrifiante industrielle ou dans une graisse.
